# EUROPEAN PATENT SPECIFICATION

(11) **EP 3 479 616 B1**
(45) Date of publication and mention of the grant of the patent: **05.05.2021**
(21) Application number: 17833388.6
(22) Date of filing: 30.06.2017
(51) Int. Cl.: H04W 72/12, H04L 1/18, H04L 5/00

(54) **COEXISTENCE OF GRANT-BASED AND GRANT-FREE UPLINK TRANSMISSIONS IN A CHANNEL**
KOEXISTENZ VON GEWÄHRUNGSBASIERTEN UND GEWÄHRUNGSFREIEN UPLINK-ÜBERTRAGUNGEN IN EINEM KANAL
COEXISTENCE DE TRANSMISSIONS DE LIAISON MONTANTE AVEC OCTROI ET SANS OCTROI DANS UN CANAL

(30) Priority: 29.07.2016 US 201615223690; 02.11.2016 US 201662416536 P
(43) Date of publication of application: 08.05.2019
(73) Proprietor: Huawei Technologies Co., Ltd., Longgang District Shenzhen, Guangdong 518129 (CN)
(72) Inventor: ISLAM, Toufiqul, Ottawa Ontario K2B 7T4 (CA); AU, Kelvin Kar Kin, Kanata Ontario K2M 0A2 (CA); BALIGH, Mohammadhadi, Ottawa Ontario K2M 0B1 (CA); ZHANG, Peng, Shenzhen, Guangdong 518129 (CN)
(74) Representative: Pfenning, Meinig & Partner mbB
(86) International application number: PCT/CN2017/091274
(87) International publication number: WO 2018/019085

(56) References cited:
- WO-A1-2011/043709
- CN-A- 103 748 907
- CN-A- 104 683 080
- CN-A- 104 994 513
- US-A1- 2012 213 196
- US-A1- 2016 219 627
- NOKIA ET AL: "Punctured Scheduling for Low Latency Transmissions", 3GPP DRAFT; R1-165381, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, P.R. China; 20160523 - 20160527 13 May 2016 (2016-05-13), XP051096643, Retrieved from the Internet: URL:http://www.3gpp.org/ftp/tsg_ran/WG1_RL 1/TSGR1_85/Docs/ [retrieved on 2016-05-13]
- SAMSUNG: "Non-Orthogonal Multiple Access Considerations for NR", 3GPP DRAFT; R1-163993 UL ACCESS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 14 May 2016 (2016-05-14), XP051096631, Retrieved from the Internet: URL:http://www.3gpp.org/ftp/tsg_ran/WG1_RL 1/TSGR1_85/Docs/ [retrieved on 2016-05-14]
- 'Discussion on Multiple Access for New Radio Systems' 3GPP TSG-RAN WGI MEETING #84BIS R1 -162922 27 May 2016, XP051079857
- SAMSUNG: 'Non-Orthogonal Multiple Access Considerations for NR' 3GPP TSG RAN WGI #85 RL-163993 27 May 2016, XP051096631

## Description

The present invention relates generally to a method and device for coding, and, in particular embodiments, to techniques for supporting the coexistence of grant-based and grant-free uplink transmissions in a channel.

### BACKGROUND

Various multiple access schemes can be used to allow multiple user equipments (UEs) to access shared resources of an uplink channel. One type of access scheme (referred to herein as "grant-based access") requires UEs to request that channel resources be scheduled to carry an uplink data transmission prior to performing the uplink data transmission. Another type of access scheme (referred to as "grant-free access") allows UEs to perform uplink data transmissions over one or more uplink resources without requesting that those resources be scheduled to carry the uplink data transmission. In conventional networks, data channel resources are exclusively allocated for either grant-based access transmissions or grant-free access transmission so that grant-based and grant-free uplink transmissions do not interfere with one another.

Because grant-free transmissions can be occasional and sporadic, it is possible that resources allocated to grant-free traffic will not be fully utilized. It is desired to allocate resources for grant-free access, in such a way that they can be used for grant-based access when there are no grant-free transmissions. However, due to the unpredictable nature of grant-free transmissions, efficient use of the resources is a challenge.

US 2012/0213196 A1 describes a wireless communication system for contention-based transmission. The system performs contention-based transmission in a wireless communication system including the steps of setting a radio resource controller (RRC) connection with a receiver end where a contention-based transmission is received; setting a resource area for the contention-based transmission to allow a collision with other transmission; and transmitting at least one of the data and control information on the resource area, wherein the resource area for the contention-based transmission can be hopped on a physical resource.

Nokia et al.: "Punctured Scheduling for Low Latency Transmissions", 3GPP Draft; Ri-165381, 3rd Generation Partnership Project (3GPP), Mobile Competence Centre; 650, Route des Lucioles; F-06921 Sophia-Antipolis Cedex; France, discusses a concept of punctured scheduling paradigms as a possible solution to have efficient multiplexing of eMBB and low latency communication traffic such as e. g. URLLC.

Samsung: "Non-Orthogonal Multiple Access Considerations for NR", 3 GPP Draft; Ri-163993 UL Access, 3RD Generation Partnerschip Project (3GPP), Mobile Competence Centre; 650, Route des Lucioles; F-06921 Sophia-Antipolis Cedex; France, considers various aspects related to the use of non-orthogonal multiple access for NR.

### SUMMARY

Technical advantages are generally achieved by embodiments of this disclosure which describe techniques for supporting the coexistence of grant-based and grant-free uplink transmissions in a channel, as defined by the appended independent claims. Further, embodiments are disclosed in the dependent claims.

In accordance with an embodiment, a method for mitigating interference is provided. In this example, the method includes detecting a grant-free uplink transmission over a first uplink resource, and determining that a retransmission of the grant-free uplink transmission will occur over a second uplink resource. The second uplink resource was previously scheduled to carry a grant-based uplink transmission from a user equipment (UE). The method further includes transmitting a signal over a downlink resource that instructs the UE to adjust a transmission parameter of the grant-based uplink transmission. An apparatus for performing this method is also provided.

Optionally, in any of the preceding embodiments, the first uplink resource and the second uplink resource each include one or more orthogonal frequency division multiplexed (OFDM) symbols.

Optionally, in any of the preceding embodiments, the signal instructs the UE to adjust the transmission parameter of the grant-based uplink transmission by instructing the UE to reduce a transmit power level of the grant-based uplink transmission during the second uplink resource.

Optionally, in any of the preceding embodiments, the signal instructs the UE to adjust the transmission parameter of the grant-based uplink transmission by instructing the UE to mute the grant-based uplink transmission during the second uplink resource.

Optionally, in any of the preceding embodiments, the grant-based uplink transmission was previously scheduled to be performed over a set of uplink resources that includes the second uplink resource and one or more additional uplink resources. The signal further instructs the UE to adjust the transmission parameter of the grant-based uplink transmission by instructing the UE to mute the grant-based uplink transmission over the second uplink resource and to adapt a modulation and coding scheme (MCS) level used to transmit portions of the grant-based uplink transmission over the one or more additional uplink resources.

Optionally, in any of the preceding embodiments, the signal instructs the UE to adjust the transmission parameter of the grant-based uplink transmission by instructing the UE to shift the grant-based uplink transmission from the second uplink resource to a third uplink resource of the subframe.

Optionally, in any of the preceding embodiments, the signal instructs the UE to adjust the transmission parameter of the grant-based uplink transmission by instructing the UE to postpone the grant-based uplink transmission.

Optionally, in any of the preceding embodiments, the signal instructs the UE to adjust the transmission parameter of the grant-based uplink transmission by instructing the UE to postpone the grant-based uplink transmission until a subsequent grant is received.

Optionally, in any of the preceding embodiments, the signal instructs the UE to adjust the transmission parameter of the grant-based uplink transmission by instructing the UE to postpone the grant-based uplink transmission.

Optionally, in any of the preceding embodiments, the signal instructs the UE to postpone the grant-based uplink transmission until a subsequent subframe specified by the signal.

Optionally, in any of the preceding embodiments, detecting the grant-free uplink transmission comprises: detecting the presence of the grant-free uplink transmission based on a pilot symbol carried by the grant-free uplink transmission, wherein the signal is transmitted prior to the base station attempting to decode at least some of the data carried by the grant-free uplink transmission.

Optionally, in any of the preceding embodiments, determining that the retransmission of the grant-free uplink transmission will occur over the second uplink resource in the subframe comprises: detecting an identifier in a pilot symbol carried by the grant-free uplink transmission; and determining that the retransmission of the grant-free uplink transmission will occur in the second uplink resource based on a semi-static resource configuration associated with the identifier.

Optionally, in any of the preceding embodiments, detecting the identifier in the pilot symbol carried by the grant-free uplink transmission comprises detecting a UE-specific identifier or a group-specific identifier in the pilot symbol carried by the grant-free uplink transmission.

Optionally, in any of the preceding embodiments, detecting the identifier in the pilot symbol carried by the grant-free uplink transmission comprises detecting an identifier in the pilot symbol carried by the grant-free uplink transmission, the identifier in the pilot symbol being associated with a time or frequency resource hopping pattern.

Optionally, in any of the preceding embodiments, the signal is transmitted prior to the base station attempting to decode at least some of the data carried by the grant-free uplink transmission.

In accordance with yet another embodiment, a method for mitigating interference in a subframe is provided. In this example, the method includes receiving a scheduling instruction indicating that uplink resources are scheduled to carry a grant-based uplink transmission of the first UE, monitoring one or more downlink resources outside a downlink control channel associated with the first UE for an indication that a retransmission of a grant-free uplink transmission is to occur over a subset of the uplink resources scheduled to carry the grant-based uplink transmission of the first UE, and puncturing a portion of the grant-based uplink transmission corresponding to the subset of uplink resources upon detecting the indication that the grant-free uplink transmission is to occur over the subset of uplink resources.

Optionally, the indication that the retransmission of the grant-free uplink transmission is to occur over the subset of uplink resources is detected in a downlink control channel associated with the second UE.

Optionally, the indication that the retransmission of the grant-free uplink transmission is to occur over the subset of uplink resources is detected in an acknowledgement or negative acknowledgment channel associated with the second UE.

### BRIEF DESCRIPTION OF THE DRAWINGS

For a more complete understanding of the present disclosure, and the advantages thereof, reference is now made to the following description taken in conjunction with the accompanying drawings, in which:
FIG. 1 is a diagram of an embodiment wireless communications network;
FIG. 2 is a diagram of a TDD subframe that enables the coexistence of grant-based and grant-free uplink transmissions over the same uplink resources;
FIGS. 3A and 3B are graphs of transmit power levels for a grant-based uplink transmission that coincides with a grant-free uplink retransmission;
FIG. 4 is a flowchart of an embodiment method for mitigating interference between grant-based uplink transmissions and grant-free uplink retransmissions;
FIG. 5 is a diagram of a subframe during which a set of resources for carrying grant-free uplink transmissions is reconfigured;
FIG. 6 is a flowchart of an embodiment method for mitigating interference between grant-based uplink transmissions and grant-free uplink transmissions, which is not an embodiment of the invention.;
FIG. 7 is a diagram of a set of resources scheduled to carry a grant-based uplink transmission of a UE ;
FIG. 8 is a diagram of an embodiment frame format for dynamically notifying a UE that a retransmission of a grant-free uplink transmission will occur over resources scheduled to carry a grant-based uplink transmission of the UE;
FIG. 9 is a diagram of another embodiment frame format for dynamically notifying a UE that a retransmission of a grant-free uplink transmission will occur over resources scheduled to carry a grant-based uplink transmission of the UE;
FIG. 10 is a flowchart of an embodiment method for puncturing a grant-based uplink transmission to mitigate interference between the grant-based uplink transmission and a grant-free uplink transmission;
FIG. 11 is a flowchart of an embodiment method 1100 for dynamically notifying a UE that a retransmission of a grant-free uplink transmission will occur over resources scheduled to carry a grant-based uplink transmission of the UE;
FIG. 12 is a diagram of an embodiment uplink channel for supporting both grant-free and grant-based uplink transmissions;
FIG. 13 is a diagram of another embodiment uplink channel for supporting both grant-free and grant-based uplink transmissions;
FIG. 14. is a diagram of subframe 1401 that includes uplink resources that are available for grant-free and grant-based transmissions
FIG. 15 is a diagram of an embodiment processing system;
FIG. 16 is a diagram of an embodiment transceiver;
FIG. 17 is a diagram of sub-frame structures featuring pilot symbols at or near the beginning of the sub-frame;
FIGS. 18A-18C are diagrams of time-frequency resource allocations in a network that supports the coexistence of grant-free and grant-based traffic;
FIGS. 18D-18E are diagrams of embodiment resource mapping configurations for initial transmissions and retransmissions;
FIG. 19A is a time-frequency resource configuration for a grant-free partition;
FIG. 19B is a diagram of another embodiment resource mapping configuration for initial transmissions and retransmissions;
FIG. 20 is a diagram of another time-frequency resource configuration for a grant-free partition;
FIGS. 21A and 21B are diagrams of embodiment grant-free time division duplex (TDD) frame structures;
FIG. 22 is a diagram of an example of a grant-free TDD frame structure; and
FIG. 23A and 23B are block diagrams of a base station transmitter and receiver, respectively.

### DETAILED DESCRIPTION OF ILLUSTRATIVE EMBODIMENTS

The making and using of embodiments of this disclosure are discussed in detail below. It should be appreciated, however, that the concepts disclosed herein can be embodied in a wide variety of specific contexts, and that the specific embodiments discussed herein are merely illustrative and do not serve to limit the scope of the claims. Further, it should be understood that various changes, substitutions and alterations can be made herein without departing from the scope of this disclosure as defined by the appended claims. In some embodiments, grant-free uplink transmissions carry ultra-reliable low latency communications (URLLC) traffic/data and grant-based uplink transmissions carry enhanced mobile broadband (eMBB) traffic/data. Other types of traffic and data may also be carried by grant-free and grant-based uplink transmissions.

Grant-based access and grant-free access both have advantages and disadvantages. For example, grant-free access generally supports lower-latency traffic requirements than grant-based access because grant-free access permits data transmissions to be performed without having to request and receive resource grants. However, grant-free uplink transmissions may collide with one another when two UEs attempt to access the same uplink resource. Those collisions may prevent the base station from successfully decoding one or both of the transmissions, which may either result in retransmissions or failure of the transmission. For this reason, grant-based uplink transmissions may provide higher reliability than grant-free uplink transmissions, particularly when there are large numbers of UEs trying to access the network.

In next generation networks, it may be desirable for grant-based and grant-free traffic to coexist on the same resources. For example, a BS may allocate channel resources (e.g., orthogonal frequency division multiplexed (OFDM) symbols, time-frequency resources, etc.) to support grant-free uplink transmissions by a group of UEs. The allocation of channel resources may be semi-static and/or configured by higher layer signaling or activated by layer 1 signaling. In some instances, the BS may then schedule one or more of the channel resources in a given subframe to carry a grant-based uplink transmissions. This may occur when, for example, the BS notices that one or more of the channel resources is being accessed infrequently by the group of UEs, or additional channel capacity for grant-based uplink transmissions is needed. Scheduling the grant-based uplink transmission over resources allocated for grant-free access may effectively increase utilization efficiency of the channel. However, if a grant-free uplink transmission is performed over the resource, then the grant-free uplink transmission may collide with the grant-based uplink transmission. This may prevent the base station from successfully decoding the grant-free uplink transmission, and require a retransmission of the grant-free uplink transmission. It may be possible that grant-free resources are grouped, which may facilitate resource sharing and/or controlling collision between grant-free and grant-based UL transmission. For example, an original grant-free transmission may occur over a first group of time and/or frequency resources, and grant-free re-transmissions may occur over a second group of time and/or resources. Alternatively, an original grant-free transmission and a first set of grant-free retransmissions may occur over a first group of time and/or frequency resources and a second set of grant-free re-transmissions may occur over a second group of time and/or frequency resources. In such an example, the first set of grant-free re-transmission may refer to first and second re-transmissions of the original grant-free transmission, and the second set of grant-free re-transmissions may refer to third and/or later re-transmissions of the original grant-free transmission. Any other combinations of grouping re-transmissions into the sets are also possible. There can be more than two groups of grant-free time and/or frequency resources configurations as well. Alternatively, group(s) of grant-free resources can be configured based on modulation and coding schemes (MCSs) supported for grant-free transmissions, for example, one group is configured for grant-free transmission with a first MCS and a second group is configured with a second MCS. Alternatively, one group may be configured to observe more grant-free transmission than a second group (e.g., more UEs can transmit in one group than other, i.e., loading can be different). Grant-based UL transmission can be scheduled in at least one group of grant-free time/frequency resources, mentioned above. These group of grant-free resources can be semi-statically configured or configured/activated by some layer 1 signaling. A grant-free UE may or may not be aware of how grouping of the grant-free resources are obtained. As expected, collision can occur over the group(s) that are also configured/used for grant-based UL transmission.

Indeed, the problem may be compounded in instances when the grant-based uplink transmission spans resource(s) used for the original grant-free uplink transmission and/or the resource used for the retransmission of the grant-free uplink transmission, particularly when the grant-free uplink transmission carries traffic having low-latency and/or high-reliability quality of service (QoS) requirements. Accordingly, techniques are needed for mitigating interference experienced by grant-free retransmissions when grant-based uplink transmissions are scheduled to resources allocated for grant-free access.

Aspects of this disclosure mitigate interference in a time division duplexed frame by altering a transmission parameter of grant-based uplink transmissions upon determining that a portion of the grant-based transmission will coincide with the retransmission of a detected grant-free uplink transmission. In this disclosure, the term "grant-free retransmission" refers to a re-transmission of an initial grant-free transmission, as may occur when a signal that was communicated as a grant-free uplink transmission over one uplink resource is re-transmitted over another uplink resource.

The grant-free retransmission may be triggered by acknowledgment/negative-acknowledgement (ACK/NACK) signaling from the BS, e.g., receiving a negative acknowledgment (NACK) message, or failing to receive an acknowledgment (ACK) message. Alternatively, a predetermined number of grant-free retransmissions may be triggered automatically (e.g., the retransmissions are performed irrespective of feedback from the BS) in order to improve reliability without incurring the latency associated with waiting for an acknowledgement that the original transmission has been successfully decoded. These automatic re-transmissions may be referred to as "repetitions." Any discussion of a grant-free retransmission herein should be understood to refer to either a first or a subsequent retransmission. The resources over which the one or more grant-free retransmissions are performed may be pre-configured (e.g., through a semi-static allocation), in which case the base station determines the resources based on a priori information. Alternatively, the resources over which the one or more grant-free retransmissions are performed may be determined according to an identifier in a pilot symbol of the original grant-free uplink transmission. This may allow the BS to predict, or otherwise identify, which uplink resources will carry the one or more retransmissions upon detecting the identifier in the pilot symbol. Transmitting the identifier in the pilot symbol of the original grant-free uplink transmission may be advantageous because pilot symbols are typically lower density transmissions than data symbols, which may allow the BS to decode the pilot symbols even when the BS is unable to decode the data symbols. Additionally, the pilot symbols may be transmitted at or near the beginning of the data transmission, in which case transmitting the identifier in the pilot symbol may allow the BS to obtain the identifier before the entire data transmission has been received. The identifier in the pilot symbol may be a UE identifier, e.g., an RNTI.

The BS may instruct the UE that is performing the grant-based uplink transmission to alter a transmission parameter of the grant-based uplink transmission by communicating a downlink control signal over a downlink resource of the TDD subframe. The term "TDD subframe" refers to a subframe that has at least one uplink resource and at least one downlink resource. TDD subframes may also include guard intervals and/or guard symbols between uplink and downlink resources. The term "uplink resource" refers to any resource over which an uplink transmission is performed. For example, an uplink resource may be a single OFDM symbol, a group of two or more OFDM symbols, a mini-slot, or a slot or an aggregation of them. Other examples are also possible. Likewise, the term "downlink resource" may refer to any resource over which a downlink transmission is performed, e.g., one or more OFDM symbols, a mini-slot, a slot, etc. The downlink control signal may be a UE specific control signal or a broadcast or multi-cast control signal, e.g., a cell-specific or group-based common control information, etc. In one embodiment, the downlink control signal instructs the UE to reduce the transmit power level of the grant-based uplink transmission during the uplink resource carrying the grant-free retransmission. In another embodiment, the downlink control signal instructs the UE to mute the grant-based uplink transmission during the uplink resource carrying the grant-free retransmission. In such an embodiment, the downlink control signal may further instruct the UE to adjust a modulation and coding scheme (MCS) level of the grant-based uplink transmission over other resources scheduled to carry the grant-based transmission to compensate for muting the grant-based uplink transmission over the uplink resource carrying the grant-free retransmission. In another embodiment, the downlink control signal instructs the UE to shift the grant-based uplink transmission to a different uplink resource in the frame. In yet another embodiment, the downlink control signal instructs the UE to postpone the grant-based uplink transmission. In such an embodiment, the downlink control signal may instruct the UE to postpone the grant-based uplink transmission until a subsequent subframe (e.g., the next subframe, two subframes, etc.) or indefinitely until a subsequent grant is received by the UE. These and other aspects are explained in greater detail below. Although "sub-frames" may have a duration of 1ms in 4G LTE and NR, it should be appreciated that the term "sub-frame" is not so limited in this disclosure, and may have any duration, e.g., .5ms, 2ms, 10ms, etc. In some embodiments, a sub-frame is defined as a specific number of symbols or timeslots.

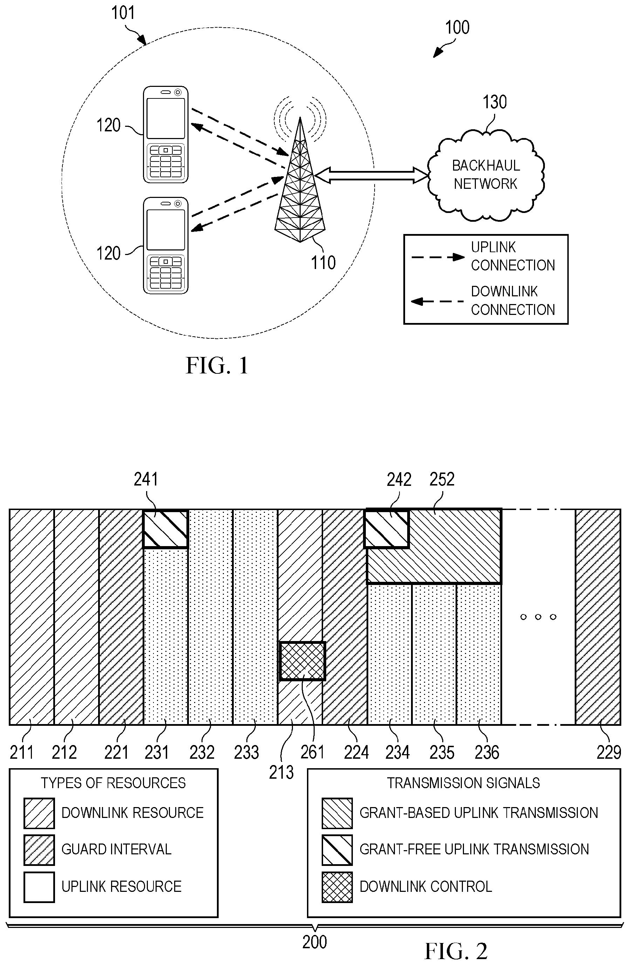

FIG. 1 illustrates a network 100 for communicating data. The network 100 comprises a base station 110 having a coverage area 101, a plurality of mobile devices 120, and a backhaul network 130. As shown, the base station 110 establishes uplink (dashed line) and/or downlink (dotted line) connections with the mobile devices 120, which serve to carry data from the mobile devices 120 to the base station 110 and vice-versa. Data carried over the uplink/downlink connections may include data communicated between the mobile devices 120, as well as data communicated to/from a remote-end (not shown) by way of the backhaul network 130. As used herein, the term "base station" refers to any component (or collection of components) configured to provide wireless access to a network, such as an evolved NodeB (eNodeB or eNB) or a gNB, a transmit/receive point (TRP), a macro-cell, a femtocell, a Wi-Fi access point (AP), or other wirelessly enabled devices. Base stations may provide wireless access in accordance with one or more wireless communication protocols, e.g., long term evolution (LTE), LTE advanced (LTE-A), High Speed Packet Access (HSPA), Wi-Fi 802.11a/b/g/n/ac, etc. As used herein, the term "mobile device" refers to any component (or collection of components) capable of establishing a wireless connection with a base station, such as a user equipment (UE), a mobile station (STA), and other wirelessly enabled devices. In some embodiments, the network 100 may comprise various other wireless devices, such as relays, low power nodes, etc.

Embodiments of this disclosure mitigate interference experienced by grant-free retransmissions when grant-based uplink transmissions are scheduled in an uplink resource carrying the grant-free retransmission. As used herein, the term "TDD subframe" refers to a subframe that has at least one uplink resource and at least one downlink resource that is time division duplexed with the uplink resource. TDD subframes may also include guard intervals/symbols between the uplink and downlink resources. FIG. 2 is a diagram of an uplink subframe 200 that permits the coexistence of grant-based and grant-free uplink transmissions. As shown, the uplink subframe 200 includes a plurality of downlink resources 211-213, a plurality of uplink resources 231-236, and a plurality of guard intervals 221, 224, 229. The guard intervals 221, 224, 229 separate uplink portions of the subframe 200 from downlink portions of the subframe 200. In some embodiments, there may also be a short guard interval that occurs after an uplink resource and prior to a downlink resource.

In this example, the uplink resources 231 and 234 are available for grant-free uplink transmissions. In some embodiments, the uplink resources 232, 233, 235, 236 are also available for grant-free uplink transmission. In other embodiments, the uplink resources 232, 233, 235, 236 are not available for grant-free uplink transmission. In this example, the uplink resources 234-236 are scheduled to carry a grant-based uplink transmission 252 of a UE to a BS. In this example, the grant-based uplink transmission 252 is shown as being scheduled over a contiguous set of uplink resources 234, 235, 236. It should be appreciated that embodiments of this disclosure are also applicable to situation in which a grant-based transmission is scheduled over non-contiguous uplink resources, e.g., the grant-based uplink transmission 252 may have been scheduled over the uplink resources 231-233 in addition to the uplink resources 234-236. The control signaling for scheduling the resources 234-236 to carry the grant based transmission 252 may be communicated in the downlink resources 211, 212 of the subframe 200. Depending on capabilities of the grant-based UE and/or the duration of the guard interval 224, the control signaling for scheduling the resources 234-236 to carry the grant based transmission 252 may also be communicated in the downlink resource 213. Alternatively, the control signaling for scheduling the resources 234-236 to carry the grant based transmission 252 may be communicated in downlink resources of an earlier frame, or higher-layer signaling.

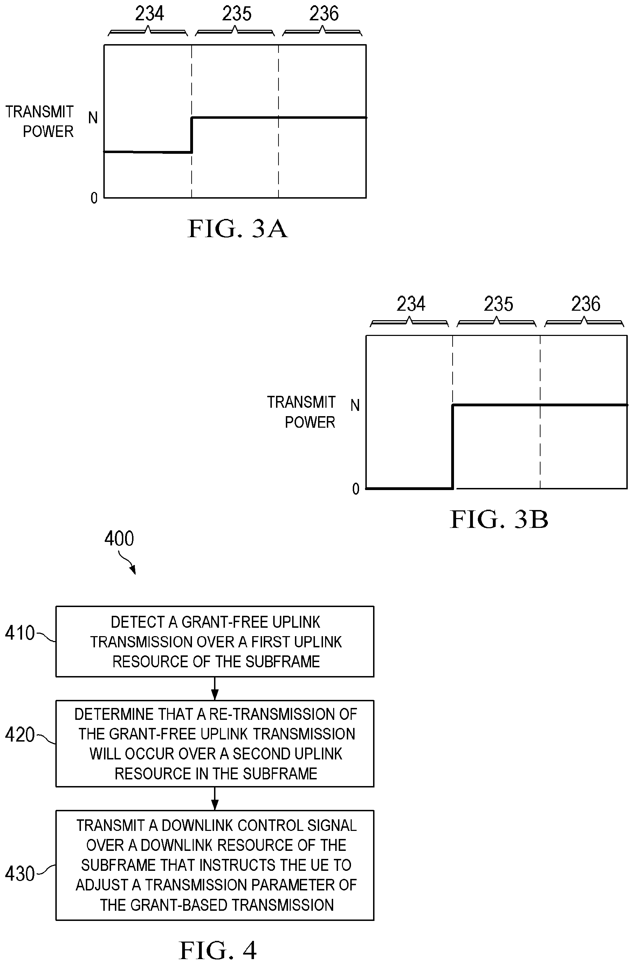

The base station detects an original grant-free uplink transmission 241 in the downlink resource 231. The BS may or may not be able to decode the original grant-free uplink transmission 241. In one example, the original grant-free uplink transmission 241 collides with a different grant-free uplink transmission communicated in the uplink resource 231. In another example, the original grant-free uplink transmission 241 collides with in a grant-based uplink transmission scheduled to a portion of the resource 231. The BS then determines that a retransmission 242 of the grant-free uplink transmission 241 will be communicated over the uplink resource 234 based on an identifier in the grant-free uplink transmission. The identifier may be carried by a pilot symbol in the grant-free uplink transmission 241. The BS then communicates a downlink control signal 261 over the downlink resource 213 that instructs the UE to modify a transmission parameter of the grant-based uplink transmission 252. Although the grant-based uplink transmission 252 is shown as beginning after the guard interval 224, it should be appreciated that in some embodiments, the grant-based uplink transmission 252 may span downlink resources in multiple sub-frames, e.g., the grant-based uplink transmission 252 could span downlink resources 232, 233, and 234-236. It should be appreciated that grant-free uplink retransmission 242 may be triggered automatically without relying on ACK/NACK signaling in the downlink resource 213. The downlink control signal 261 may be a UE-specific control signal or a broadcast control signal. In one embodiment, the downlink control signal 261 instructs the UE to reduce the transmission power of the grant-based uplink transmission 252 during the uplink resource 234. FIG. 3A is a graph of a transmit power level of the grant-based uplink transmission 252 during the uplink resources 234, 235, 236 when the transmit power level of the grant-based uplink transmission 252 is lowered during the uplink resource 234 that carries the grant-free uplink retransmission 242. Although the grant-free uplink transmission 241 and the grant-free uplink retransmission 242 are depicted as being transmitted over a single uplink resource 231 and 234 (respectively), it should be appreciated that grant-free uplink transmission and/or retransmissions may span multiple uplink resources.

In another embodiment, the downlink control signal 261 instructs the UE to mute the grant-based uplink transmission 252 during the uplink resource 234. FIG. 3B is a graph of a transmit power level of the grant-based uplink transmission 252 during the uplink resources 234, 235, 236 when the transmit power level of the grant-based uplink transmission 252 is muted during the uplink resource 234 that carries the grant-free uplink retransmission 242. In yet another embodiment, the downlink control signal 261 instructs the UE to postpone the grant-based uplink transmission 252 until a specified or predetermined subsequent frame, or indefinitely until a subsequent grant is received. In one embodiment, the downlink control signal 261 may also instruct the UE to mute the grant-based uplink transmission 252 during the uplink resource 234 and to adjust an MCS parameter (e.g., a coding rate, etc.) of the grant-based uplink transmission 252 during one or both of the uplink resources 235, 236 in order to compensate for the muting the grant-based uplink transmission 252 during the uplink resource 234. In yet another embodiment, the downlink control signal instructs the UE to shift the entire grant-based uplink transmission 252 to a different set of resources in the uplink frame 200.

A base station may perform grant-free activity detection based on a combination of metrics that depend on, for example, loading parameters associated with grant-free uplink transmissions, a received power level of one or more grant-free uplink transmissions, and a number of active UEs, etc. In some embodiments, activity detection is performed to identify an overlap between grant-based and grant-free traffic. If the number of grant-free UEs transmitting exceeds a threshold value, then grant-based UEs maybe instructed to adjust transmission parameters over resources for which grant-free retransmissions are to occur. In some embodiments, the instruction is a multi-level notification that depends on how many metrics for detection are accounted for. When using a multi-level notification, a grant-based UE may be instructed to continue to transmit at the assigned power, to reduce a transmit power level to half or any other value, to puncture all or a specified portion of the grant-free resources, and/or to implement some other interference mitigation technique.

FIG. 4 is a flowchart of an embodiment method 400 for mitigating interference between grant-based uplink transmissions and grant-free uplink retransmissions, as may be performed by a base station. At step 410, the base station detects a grant-free uplink transmission over a first uplink resource of the subframe. At step 420, the base station determines that a retransmission of the grant-free uplink transmission will occur over a second uplink resource in the subframe. In one embodiment, the first uplink resource over which the grant-free uplink transmission is detected and the second uplink resource over which the retransmission occurs are orthogonal (i.e., do not overlap) in the time-domain and/or frequency domain. In another embodiment, the first uplink resource over which the grant-free uplink transmission is detected and the second uplink resource over which the retransmission occurs are overlap in the time-domain and/or frequency domain.

It should be appreciated that the grant-free uplink transmission detected in step 410 may be an original uplink transmission or a retransmission of an original transmission, and the "retransmission" referred to in step 420 may be a first retransmission of the original uplink transmission or a subsequent retransmission (e.g., second, third, etc.) of the original uplink transmission. At step 430, the base station transmits a downlink control signal over a downlink resource of the subframe that instructs the UE (e.g., a grant-based UE) to adjust a transmission parameter of the grant-based uplink transmission. In an embodiment, the downlink control signal that instructs the UE to adjust the transmission parameter of the grant-based uplink transmission is a UE-specific or group-specific downlink control information (DCI) message. In another embodiment, the downlink control signal that instructs the UE to adjust the transmission parameter of the grant-based uplink transmission is transmitted in a UE-specific region or a group-specific region of a downlink frame.

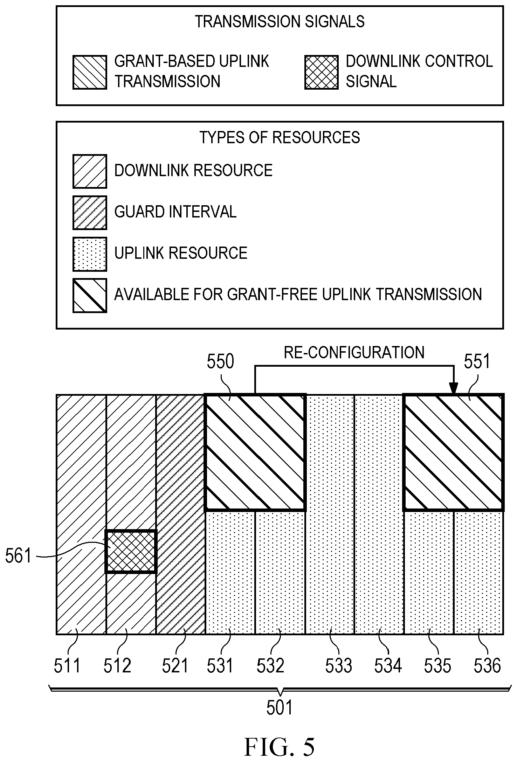

In some embodiments, a base station will re-configure a set of resources assigned to carry grant-free uplink transmissions to mitigate interference between grant-based and grant-free uplink transmissions. FIG. 5 is a diagram of subframe 501 during which a set of resources for carrying grant-free uplink transmissions is reconfigured by a downlink control signal 561. The control signal 561 can be UE-specific or group-common. As shown, the TDD subframe 501 includes a plurality of downlink resources 511-512, a plurality of uplink resources 531-536, and a guard interval 521. The guard interval 521 separates uplink portions of the subframe 501 from downlink portions of the subframe 501. In this example, a downlink control signal 561 is transmitted over the downlink resource 512 to reconfigure an access space available for grant-free uplink transmission. The access space includes an initial set of resources 550 prior to reconfiguration, and an updated set of resources 551 following the reconfiguration. In this example, the initial set of resources 550 does not overlap with the updated set of resources 551. In other examples, the initial and updated sets of resources partially overlap such that the sets both include least one common uplink resource. In some embodiments, the reconfiguration may be prompted by scheduling of a grant-based uplink transmission over one or both of the uplink resources 531, 532. Re-configuration may be performed for whole or part of the configured grant-free access space, e.g., set of time-frequency resources available for grant-free transmissions, etc. Although FIG. 5 illustrates a re-configuration of resources available for grant-free transmission in the time domain such that the updated set of resources 551 spans a different set of time-domain resources than the initial set of resources 550, it should be appreciated that some embodiments may reconfigure resources available for grant-free transmission in the frequency domain such that the resulting updated set of resources spans a different set of frequency-domain resources (e.g., sub-carrier frequencies) than the initial set of resources. It should also be appreciated that some embodiments may reconfigure resources available for grant-free uplink transmission in both the time-domain and the frequency-domain such that the resulting updated set of resources spans a different combination of time-frequency resources than the initial set of resources. Other examples are also possible. For example, embodiments may reconfigure resources available for grant-free uplink transmission in the code domain and/or spatial domain.

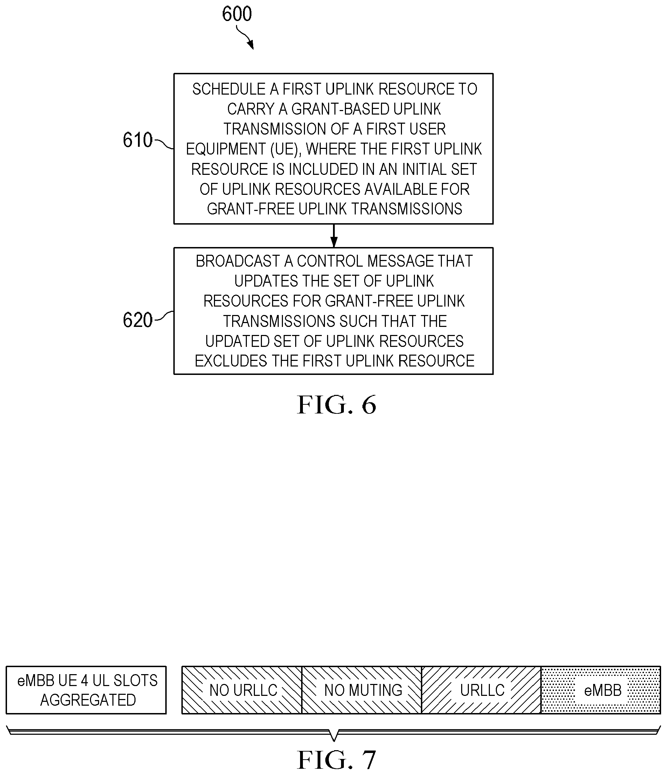

FIG. 6 is a flowchart of an embodiment method 600 for mitigating interference between grant-based and grant-free uplink transmissions, as may be performed by a base station. At step 610, the base station schedules a first uplink resource to carry a grant-based uplink transmission of a first user equipment (UE). The first uplink resource is included in an initial set of uplink resources available for grant-free uplink transmissions. At step 620, the base station sends a signal that updates the set of uplink resources for grant-free uplink transmissions. In one example, the signal is a downlink control information (DCI) message. In another example, the signal is a radio resource control (RRC) message. The updated set of uplink resources excludes the first uplink resource.

In some examples, a grant-based transmission may be scheduled over multiple uplink resources. FIG. 7 is a diagram of a set of resources scheduled to carry a grant-based uplink transmission of a UE. In an embodiment, a grant-based UE monitors DL control for possible grant-free transmission. If a grant-free transmission is detected, the BS may adjust (e.g., postpone) a grand-based transmission of the grant-based UE in one or more UL resources. Those UL resources are used by grant-free transmission. The grant-based transmission may resume after grant-free transmissions are no longer using the resources scheduled for the grant-based transmission.

Although many of the embodiments for coexistence of grant-free and grant-based transmissions are shown in TDD channels, it should be appreciated that those embodiments can also be used for coexistence of grant-free and grant-based transmissions in frequency division duplexed (FDD) channels. Additional techniques for the coexistence of grant-free and grant-based transmissions in TDD channels are described in U.S. Non-Provisional Application No. 15/223,690, filed on June 29, 2016 entitled "System and Method for Retransmission of Grant-Free Traffic,".

Embodiments of this disclosure provide techniques for dynamically signaling when a retransmission of a grant-free uplink transmission is to occur over a subset of uplink resources scheduled to carry a grant-based uplink transmission of a UE. This may allow the UE to mitigate, or avoid, interference between the grant-based uplink transmission and the grant-free uplink transmission by puncturing a portion of the grant-based uplink transmission that corresponds to the subset of uplink resources that will carry the grant-free uplink transmission.

In one embodiment, the indication is transmitted over a control channel that is associated with a different UE than the UE which is scheduled to perform the grant-based uplink transmission. In such an embodiment, the UE scheduled to perform the grant-based uplink transmission may be configured to monitor the control channel of the other UE. The control channel over which the indication is transmitted may be a UE-specific control channel associated with a different UE than the UE which is scheduled to perform the grant-based uplink transmission, or a group-specific control channel associated with a group of UEs that excludes the UE that is scheduled to perform the grant-based uplink transmission. The indication could also be communicated over a control channel associated with the UE scheduled to perform the grant-based transmission.

In one embodiment, the control channel that carries the indication is separately configured from other control channels that provide DL or UL scheduling grants and/or HARQ feedback of UL transmissions. At least one grant-based UE can be configured to monitor one or multiple control channels which provide indication(s) for UL resource adjustment of grant-based UEs. In another embodiment, a control channel configured for sending DL or UL grant or HARQ feedback information of UL transmission can be reused for sending the indication. In the case of reusing a control channel for DL or UL grant or HARQ feedback, the control channel may be monitored not only by the grant-based UEs whose UL transmission could be adjusted, but also by other grant-free and/or grant-based UEs that receive grant or HARQ feedback information. For example, A/N feedback of grant-free transmissions can be monitored by grant-based UEs if they are scheduled in a time-frequency resource where UL grant-free transmissions can be expected.

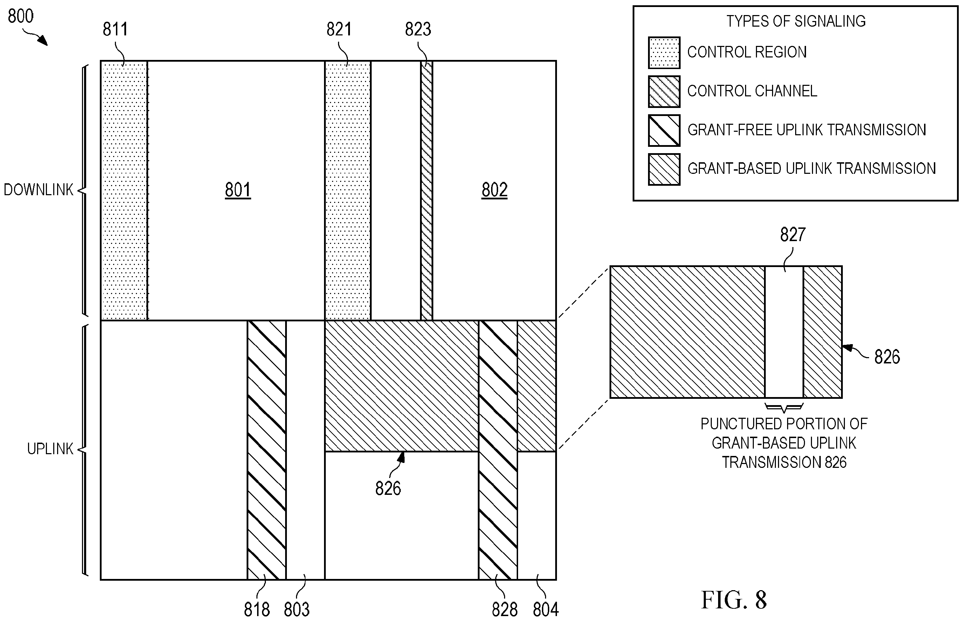

FIG. 8 is a diagram of a frame format 800 for dynamically notifying a UE that a retransmission of a grant-free uplink transmission will occur over resources scheduled to carry a grant-based uplink transmission of the UE. As shown, in the frame format 800, downlink transmissions are communicated over downlink subframes 801, 802, and uplink transmissions are communicated over uplink subframes 803, 804. The downlink subframes 801, 802 include control regions 811, 821, respectively. The control region 811 carries signaling that assigns a set of resources in the uplink subframe 804 to carry a grant-based uplink transmission 826. It should be appreciated that location of grant-based control information at the beginning of a sub-frame is an example only, and other locations are also possible. In some embodiments, a grant-based UE can be configured to monitor UL grant in any symbol(s) of a DL sub-frame. In this example, a base station detects the grant-free uplink transmission 818, determines that a retransmission 828 of the grant-free uplink transmission 818 is to occur over a subset of the resources scheduled to carry the grant-based uplink transmission 826, and sends an indication over a configured control channel 823 in the downlink subframe 802. The control channel 823 may be a UE-specific or group-specific control channel. The time frequency resources where 823 is located may or may not be shared with other control channel and/or downlink data transmissions. The indication sent over the control channel 823 prompts, or otherwise instructs, a UE scheduled to perform the grant-based uplink transmission 826 to puncture a portion 827 of the grant-based uplink transmission 826 corresponding to the subset of resources that will carry the retransmission 828 of the grant-free uplink transmission 818. Although the retransmission 828 is shown as a grant-free uplink transmission in the example depicted by FIG. 8, it should be appreciated that, in other examples, a "retransmission of a grant-free uplink transmission" may itself be a grant-based uplink transmission. The grant-based uplink transmission 826 may originate from a different UE than the grant-free uplink transmission 818 and/or the retransmission 828 of the grant-free uplink transmission. Alternatively, the grant-based uplink transmission 826 may originate from the same UE as the grant-free uplink transmission 818 and/or the retransmission 828. It should be appreciated that the control channel 823 may be any control channel, including a control channel that is assigned to the UE which is scheduled to perform the grant-based uplink transmission 826 and/or a control channel that is different than, or otherwise not located within, a downlink control channel associated with the UE scheduled to perform the grant-based uplink transmission 826. In one example, the control channel 823 is a control channel associated with the UE that transmitted the grant-free uplink transmission 818. In such an example, the control channel 823 may be an acknowledgment negative-acknowledgment (ACK/NACK) channel associated with the UE that transmitted the grant-free uplink transmission 818, and grant-based UEs may monitor that ACK/NACK channel for negative acknowledgement (NACK) messages that indicate that a grant-free uplink transmission 818 was not successfully received by the base station, in which case the grant-based UEs may determine that a retransmission 828 will occur in the uplink subframe 804. In another example, the control channel 823 is associated with a different grant-based UE. The control channel 823 may have a similar structure to the control channel that provides downlink or uplink scheduling grants (e.g., a PDCCH) if the control channel is UE specific. Alternatively, if the control channel 823 is monitored by a group of grant-based UEs, then the control channel 823 may have a structure of a group-common control channel (e.g., group-PDCCH), e.g., checked by a group RNTI.

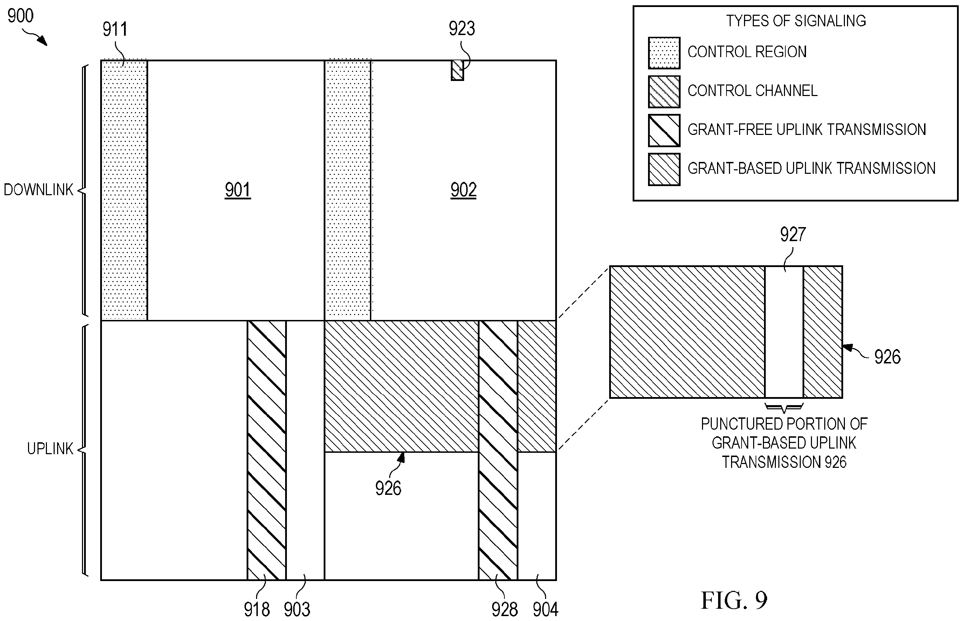

In another embodiment, the indication is transmitted over a downlink data channel of a frame or subframe. FIG. 9 is a diagram of another frame format 900 for dynamically notifying a UE that a retransmission of a grant-free uplink transmission will occur over resources scheduled to carry a grant-based uplink transmission of the UE. Like the frame format 800, in the frame format 900, a downlink subframe 901 includes a control region 911 that carries control signaling assigning a set of uplink resources in an uplink subframe 904 to carry a grant-based uplink transmission 926, and the uplink subframe 903 carries a grant-free uplink transmission 918. The base station may determine that a retransmission 928 of the grant-free uplink transmission 918 is to occur over a subset of the resources scheduled to carry the grant-based uplink transmission 926 in the uplink subframe 904.

However, unlike the frame format 800, the base station sends an indication of the retransmission 918 in a control channel 923 within the data channel in the downlink subframe 902. The resources may be shared between the control channel 923 and one or multiple downlink data transmission. In one embodiment, the control channel 923 may reside within pre-configured time-frequency resources that are known to the grant-based UE(s) monitoring the indication signaling. In one embodiment, the control channel 923 may puncture one or multiple ongoing downlink transmissions. In another embodiment, the control channel 923 can be super-imposed with other downlink transmissions. In yet another embodiment, the control channel 923 may align with a punctured portion of a downlink transmission (not shown) in the downlink subframe 902.

Control channels 823 and 923 can have the same structure or different structures. For example, control channel 823 can have a conventional PDCCH structure where CRC is appended to distinguish the PDCCH in a search space where other PDCCH can also be sent which may or may not have the same payload size. Control channel 923 may have a preconfigured location that is monitored by grant-based UEs for indication signaling. When no indication is sent, the resource set of control channel 923 can be used for other DL transmissions. Because this resource set is pre-configured, CRC may not need to be appended because the UEs may not need to distinguish different control signaling in the pre-configured resource. Alternatively, the control channel 923 can be encoded similarly to data transmissions. In one example, the control channel 923 is not appended with UE or group identifier information. The indication prompts, or otherwise instructs, a UE scheduled to perform the grant-based uplink transmission 926 to puncture a portion 927 of the grant-based uplink transmission 926 corresponding to a subset of resources that will carry the retransmission 928 of the grant-free uplink transmission 918. In one embodiment, control channel 923 located in a downlink data channel may be associated either with the UE that is scheduled to transmit the grant-based uplink transmission 928 or with a different UE, such as a UE that transmitted the grant-free uplink transmission 918 or a different grant-based UE. The control channel 923 may carry a broadcast, multi-cast, or unicast signal.

The control channels 823 or 923 in FIGS. 8 and 9 may have a duration of a mini-slot. A mini slot consists of fewer symbols than a slot. Uplink and downlink subframes shown in FIGS. 8 and 9 may comprise a slot or an aggregation of slots or aggregation of slot(s) and mini-slot(s).

In one embodiment, the content or the granularity of indication of time-frequency resources in the provided signaling can be configurable. The signaling may indicate one or more time-domain resources frequency-domain resources, time-frequency resources, or code-domain resources. In the time domain, the granularity can be one or a combination/group of symbols, slots, mini-slots, or units of time (e.g., one or more µs, etc.). In the frequency domain, the granularity can be one or a combination/group of PRBs, sub-bands, or units of frequency (in Hz). In the code domain, the signaling may indicate one or a combination/group of code-blocks.

In one embodiment, grant-free UEs may receive layer one signaling which may update transmission parameters. The layer one signaling can be received before or after an initial grant-free transmission. In one example, after the base station identifies that a grant-free transmission of a UE may collide (e.g., persistently or otherwise) with a grant-based transmission, the UE performing the grant-free transmission may receive dynamic signaling which may update transmission parameters, for example, MCS, hopping pattern, time-frequency resources, number of repetitions, power etc. The signaling can be UE specific or group-based.

In one embodiment, both grant-free and grant-based transmissions may originate from the same UE. In such an embodiment, the UE may not need to monitor a control channel for an indication of adjustment of UL resources or transmission parameters. This is because both grant-based and grant-free transmissions are being transmitted from the same UE, and as a result, the UE knows the time-frequency resources used for grant-free transmissions and time-frequency resources scheduled for grant-based transmissions. The grant-free transmission can be initiated based on semi-static configuration only or may use a separate activation control signal after semi-static configuration. Depending upon how the grant-free transmission is configured, the UE behavior can be identified. In one embodiment, if an activation signal is configured but not received and if a grant-free packet arrives at the UE, then the UE may continue grant-based transmission and wait for the next activation signal to transmit the grant-free packet. In another embodiment, if a grant-free packet arrives at the UE and if an activation signal is received or a grant-free transmission can be initiated following semi-static configuration only, several options for UE behavior can be identified for the UE that also transmits grant-based traffic, such as 1) If there is a grant-based transmission on-going, the grant-based and grant-free transmissions can be super-imposed over the configured time-frequency resources for grant-free transmission. The transmit power of the grant-based transmission may be adjusted over the area of superposition. Alternatively, 2) the UE may puncture or postpone the grant-based transmission over the area of overlap. The same reference signal/sequence can be used for both transmissions, or the grant-free traffic may have its own reference sequence embedded in its transmission. If the grant-free transmission has a higher reliability requirement, the grant-free transmission can be decoded using reference signals in both grant-based and grant-free transmissions, which may improve channel reliability/robustness. As mentioned above, the reference sequence may also provide a UE identification. If the same reference sequence (RS) is used for both grant-based and grant-free traffic (e.g., front loaded RS in a grant-based transmission), the UE may provide additional information to indicate the existence of grant-free traffic. An indication may be provided in an uplink control channel so that BS identifies the existence of grant-free traffic from a UE that is transmitting grant-based traffic concurrently. If the time-frequency resources of grant-free traffic are configured, a one-bit indication can notify the BS of the existence of grant-free traffic. The BS can attempt to decode the grant-free traffic in the configured time-frequency resources. If the time-frequency resources of the grant-free traffic are not configured, a multi-bit indication can be provided to identify the time-frequency resources in which a grant-free transmission has occurred. The indication can be sent during the grant-free transmission or after, depending upon the latency requirement of the grant-free transmission.

In one embodiment, one UE may transmit a first and a second type of grant-free traffic, having different latency requirements. In one example, the first type of grant-free traffic is eMBB and the second type is URLLC. The UE may be configured with the same or different RS for transmission of different types of grant-free traffic. In one example, the UE ID can be mapped to multiple RSs. One set of RSs can be used for the first type of grant-free traffic and a second set of RSs can be used for the second type of grant-free traffic. Because different types of grant-free traffic can have different semi-static configurations, such as the number of grant-free repetitions, it can be useful for the BS to identify which type of grant-free traffic is received from the UE, if the UE can send multiple types of grant-free traffic. Here, the RS can be used not only as a UE identifier but also as an identification of the service type. Alternatively, the service type or grant-free traffic type can be indicated in a separate channel, for example, in a UL control channel. In one example, grant-free transmissions of the first type can have a longer duration than grant-free transmissions of the second type. The mechanisms mentioned in the above paragraph for concurrent transmission of multiple traffic types can be applicable here as well. The UE can puncture/postpone/super-impose multiple grant-free transmissions. RSs can be shared between multiple grant-free transmissions or each grant-free transmission can be embedded with its own RS. The indication transmission from the UE to notify the BS of the existence of a grant-free transmission mentioned above can be applicable here as well.

In one embodiment, different UEs may transmit different traffic types, for example, eMBB/URLLC/mMTC, over shared time-frequency resources without receiving a resource grant. For example, relatively low-payload eMBB packets can be transmitted in a grant-free manner to reduce signaling overhead. Different traffic types may have different transmission parameters (e.g., RRC configurations, time-frequency resources, RS, MCS, number of repetitions, hopping pattern, power control parameters, maximum number of HARQ processes, etc.), different quality of service requirements (e.g., latency, throughput, reliability, coverage), and/or different grant-free transmission procedures (e.g., grant-free transmissions of one type of traffic may be initiated by RRC signaling, whereas grant-free transmissions of another type of traffic may be initiated by layer one signaling). In one example, a first UE and a second UE transmit packets without grant in a shared time-frequency resource. The base station has detected the activity of the first UE. After detecting the activity of the second UE in resources overlapping with the transmission of the first UE, the base station may provide signaling to either or both of the first or the second UE, to adjust or stop or postpone transmission by either UE in one or more subsequent intervals. In one example, the base station may provide a de-activation signal to the first or the second UE to stop transmission in shared resources or areas of potential overlap. In another example, a signaling may be provided to the first UE when the activation signal is sent to the second UE before the second UE starts grant-free transmission so that the first UE may adjust/stop/postpone its transmission. The signaling may optionally include an indication related to time-frequency resources where two transmissions are overlapping. The indication signaling mechanisms discussed above in the context of grant-based and grant-free transmission coexistence can be applied here, such that indication signaling can be monitored by a UE configured for grant-free transmission as well.

In some examples, grant-free transmissions of different traffic types and/or grant-free transmissions from different groups of UEs may potentially occur over shared resources. In such examples, the grant free transmissions may be configured and/or activated via different types of signaling. In one example, a first group of UEs is configured with RRC configuration and L1 activation, and a second group of UEs is configured with RRC configuration and L1 activation. In another example, a second group of UEs is configured with RRC configuration and does not require any L1 activation signaling before starting transmission, and a second group of UEs is configured with RRC configuration and L1 activation. In yet another example, a first group of UEs is configured with RRC configuration and L1 activation, and a second group of UEs is configured with RRC configuration and does not require any L1 activation signaling before starting transmission. In yet another example, a first group of UEs is configured with RRC configuration and does not require L1 activation before starting transmission, and a second group of UEs is configured with RRC configuration and does not require any L1 activation before starting transmission. For each of these examples, either group or both groups of UEs may monitor signaling to adjust ongoing and/or subsequent grant-free transmissions, which may be sent if the base station detects a suspected or persistent collision. The adjustment signaling may instruct the UE to puncture, postpone, and/or suspend all or a part of a transmission and/or to change transmission parameters (e.g., MCS, hopping patterns, number of repetitions, power control, etc.). The signaling can be UE-specific or group-specific signaling. The signaling can be independent of activation/de-activation signaling (if configured) or signaling can be conveyed by activation/de-activation signaling. In one example, activation/de-activation signaling can be augmented to include an instruction to adjust one or more transmission parameters. Similar mechanisms can be extended when there are more than two groups of UEs transmitting grant-free traffic and each group is transmitting a different traffic type which may have different RRC configurations.

In one embodiment, the indication and/or activation/deactivation signaling can be monitored by grant-based or grant-free UEs either in an active state or an inactive state.

It should be appreciated that the indication signaling mechanisms can be applicable to any of the embodiments described in this application, including those in which the signaling is monitored either by a grant-free or grant-based UE. The type (e.g., UE specific/group-based), content (e.g., payload and/or granularity of time-frequency resource indication and/or indication of adjustment in transmission parameters) and/or structure (e.g., follow PDCCH structure or not) of indication signaling are discussed in a general context which is not limited to any particular coexistence scenario.

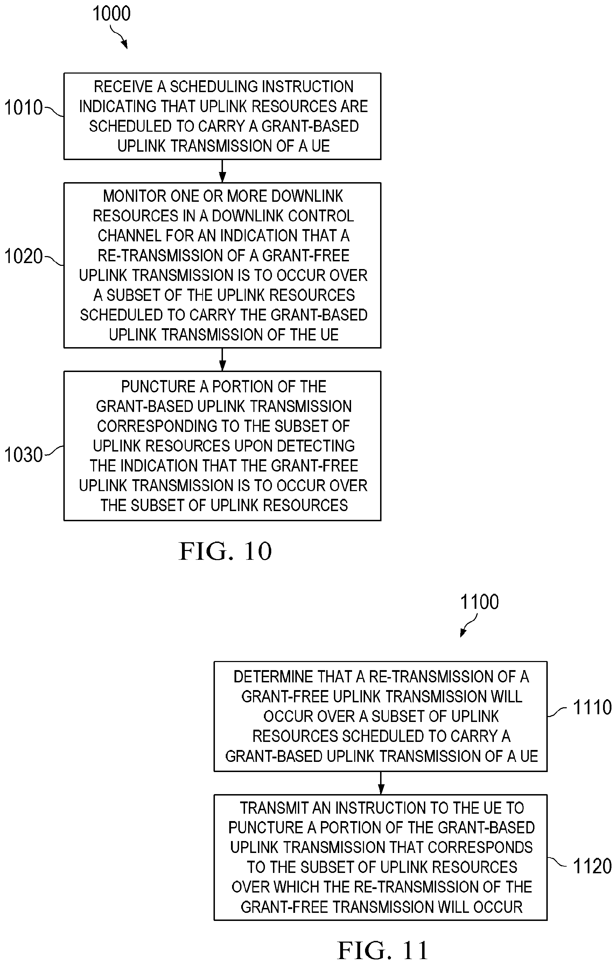

FIG. 10 is a flowchart of an embodiment method 1000 for puncturing a grant-based uplink transmission to mitigate interference between the grant-based uplink transmission and a grant-free uplink transmission, as may be performed by a UE. At step 1010, the UE receives a scheduling instruction indicating that uplink resources are scheduled to carry a grant-based uplink transmission of the UE. At step 1020, the UE monitors one or more downlink resources in a downlink control channel for an indication that a retransmission of a grant-free uplink transmission is to occur over a subset of the uplink resources scheduled to carry the grant-based uplink transmission of the UE. At step 1030, the UE punctures a portion of the grant-based uplink transmission corresponding to the subset of uplink resources in response to detecting the indication that the grant-free uplink transmission is to occur over the subset of uplink resources.

FIG. 11 is a flowchart of an embodiment method 1100 for dynamically notifying a UE that a retransmission of a grant-free uplink transmission will occur over resources scheduled to carry a grant-based uplink transmission of the UE, as may be performed by a base station. At step 1110, the base station determines that a retransmission of a grant-free uplink transmission will occur over a subset of uplink resources scheduled to carry a grant-based uplink transmission of a UE. At step 1120, the base station transmits an instruction to the UE to puncture a portion of the grant-based uplink transmission that corresponds to the subset of uplink resources over which the retransmission of the grant-free transmission will occur.

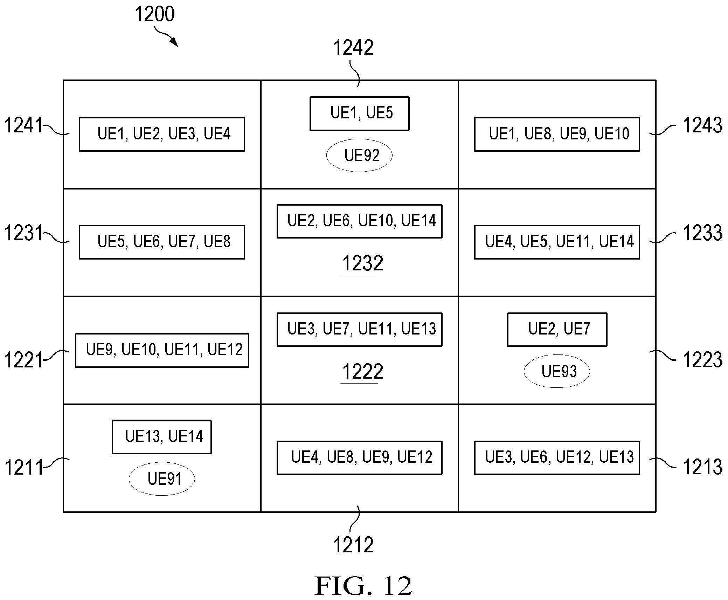

In some embodiments, grant-based uplink transmissions are strategically scheduled over uplink resources that are less likely than other uplink resources to carry grant-free uplink transmissions. FIG. 12 is a diagram of an embodiment uplink channel 1200 for supporting both grant-free and grant-based uplink transmissions. In this example, different groups of grant-free UEs (UEi-UE 14) are assigned to different access spaces 1211-1241 in an uplink channel 1200. For instance, a group of two UEs (UE13, UE14) is assigned to the access space 1211, and as a result, UE13 and UE14 are permitted to transmit grant-free uplink transmissions over uplink resources in the access space 1211. Likewise, a group of four UEs (UE4, UE8, UE9, and UE12) are assigned to the access space 1212, which allows UE4, UE8, UE9, and UE12 to transmit grant-free uplink transmissions over uplink resources in the access space 1212. Similarly, a group of four UEs (UE3, UE6, UE12, and UE13) are assigned to the access space 1213, a group of four UEs (UE9, UE10, UE11, and UE12) are assigned to the access space 1221, a group of four UEs (UE3, UE7, UE11, and UE13) are assigned to the access space 1222, a group of two UEs (UE2 and UE7) are assigned to the access space 1223, a group of four UEs (UE5, UE6, UE7, and UE8) are assigned to the access space 1231, a group of four UEs (UE2, UE6, UE10, and UE14) are assigned to the access space 1232, a group of four UEs (UE4, UE5, UE11, and UE14) are assigned to the access space 1233, a group of four UEs (UE1, UE2, UE3, and UE4) are assigned to the access space 1241, a group of two UEs (UE1 and UE5) are assigned to the access space 1242, and a group of four UEs (UE1, UE8, UE9, and UE10) are assigned to the access space 1243.

To reduce the likelihood of collisions between grant-free uplink transmissions and grant-based uplink transmissions, grant based transmissions may be scheduled in access spaces that are assigned to smaller groups of grant-free UEs. Grant-free resources maybe configured in different parts and each part may observe a loading of traffic that is different than other parts. In this example, the access spaces 1211, 1223, and 1242 are assigned smaller groups of grant-free UEs than the access spaces 1212-1222, 1231-1241, and 1243, and as a result, a grant-based uplink transmission by UE91 is scheduled in access space 1211, a grant-based uplink transmission by UE92 is scheduled in access space 1242, and a grant-based uplink transmission by UE93 is scheduled in access space 1223. Although access spaces having smaller groups of grant-free UEs may generally be given priority in terms of grant-based scheduling, it should be appreciated that access spaces assigned to larger groups of grant-free UEs may also be used to carry grant-based uplink transmissions when the demand for grant-based resources exceeds the capacity of the access spaces having smaller groups of grant-free UEs.

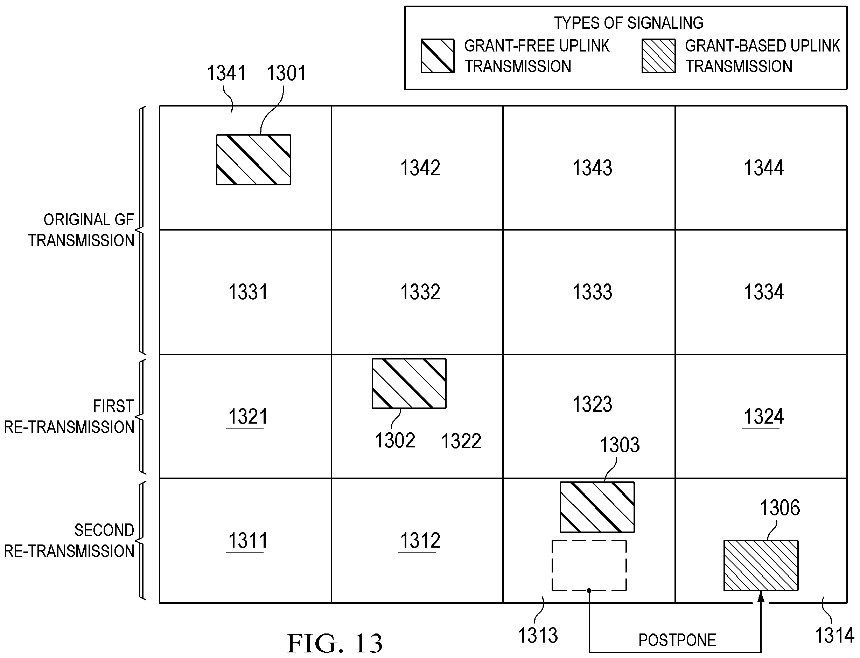

In some embodiments, an uplink channel is divided into regions assigned for initial grant-free uplink transmissions and regions assigned for retransmissions of grant-free uplink transmissions. In such an embodiment, regions assigned to, or otherwise used for, the retransmissions may be given priority in terms of grant-based scheduling over the regions used for initial grant-free uplink transmissions, because base stations may be able to predict the retransmissions and delay, or otherwise adjust, the grant-based uplink transmissions to mitigate interference between the retransmissions and the grant-based uplink transmissions. FIG. 13 is a diagram of an embodiment channel configuration 1300 for supporting both grant-free and grant-based uplink transmissions.

In this example, regions 1331-1344 are available for initial grant-free uplink transmissions, regions 1321-1324 are available for first retransmissions of initial grant-free transmissions, and regions 1311-1314 are available for second retransmissions of initial grant-free transmissions.

In one embodiment, grant-based transmissions are scheduled primarily over the regions 1311-1314 associated with the second re-transmission of grant-free transmissions, and/or regions of subsequent transmissions (e.g., third re-transmissions, fourth re-transmissions, etc.). This allows the base station to predict when a retransmission of a grant-free uplink transmission will interfere with a previously scheduled grant-based uplink transmission of a UE, and instruct the UE to compensate (e.g., delay, puncture, etc.) the grant-based uplink transmission accordingly to mitigate, or prevent, interference between the grant-based uplink transmission and the retransmission of the grant-free uplink transmission.

In another embodiment, regions 1334-1341 may be used exclusively for grant-free transmissions and/or re-transmissions of grant-free transmissions, and regions 1311-1314 may be used for both grant-based transmissions and re-transmissions of grant-free transmissions. In one specific example, 1324-1341 can be used for initial/original grant-free transmission and some subsequent retransmissions/repetitions, e.g., first or first and second re-transmissions, and 1311-1314 can be used for some later re-transmissions that can occur after those configured to appear in 1324-1341 region, e.g., third or later re-transmissions (which can be grant-free or grant-based) can occur over 1311-1314.

In yet another embodiment, one region is used exclusively for grant-free transmissions and/or re-transmissions of grant-free transmissions, another region is used for both grant-based transmissions and re-transmissions of grant-free transmissions, and yet another region is used exclusively for grant-based transmissions.

In this example, a base station detects an initial grant-free uplink transmission 1301 in the region 1341 and/or a first retransmission 1302, of the initial grant-free uplink transmission 1301, in the region 1322, and determines that a second retransmission 1303, of the initial grant-free uplink transmission 1301, will occur in the region 1313. These determinations may be based on a pre-configured mapping and/or semi-static resource configuration. A grant-based uplink transmission 1306 of a UE was previously scheduled to occur in the region 1313. The base station communicates an indication that instructs, or otherwise prompts, the UE to postpone the grant-based uplink transmission 1306 until the region 1314, thereby avoiding a collision between the grant-based uplink transmission 1306 and the second retransmission 1303 of the initial grant-free uplink transmission 1301. Although the first retransmission 1302 and the second retransmission 1303 are depicted as grant-free transmissions in this example, it should be appreciated that, in other examples, the first retransmission 1302 and/or the second retransmission 1303 may be grant-based uplink transmissions.

The downlink control signal that notifies a grant-based UE that a retransmission of a grant-free transmission will occur over a resource previously scheduled to the grant based UE may be UE specific or group-specific signaling. The signaling can be sent as often as every grant-free transmission interval. Different diversity configurations (e.g., transmit diversity, frequency diversity, etc.) and/or encoding and precoding configurations (e.g., low MCS with or without interleaving, beamforming, etc.) may be used to increase the reliability of the downlink control signal. The location of the uplink preemption indication can be in a PDCCH region located in the first few symbols of a slot or, alternatively, in a PDCCH region that occurs in subsequent symbols of a slot. Alternatively, the indication may be encoded and transmitted over PDSCH resources with the same or a different MCS compared to other PDSCH transmissions. The grant-based UE which is scheduled in a shared region can be configured to monitor downlink control signaling for adjusting an ongoing transmission. The location(s) in which a UE is to monitory for uplink preemption indications may be configured via UE specific or group-specific control signaling. In one example, a monitoring interval is configured in terms of number of symbols or slots, or a combination thereof.

The control channel used for indication may or may not overlap with other control channels present in the symbol(s) where the indication is sent. In one example, a group-common control signal can be transmitted as often as every grant-free interval, e.g., some control resource sets may have to be monitored by grant-based UEs at mini-slot granularity. Group-specific control signaling that carries UL pre-emption indications can be transmitted inside or outside the PDCCH region of a slot. In one example, the group-common signaling can be provided in the same control region where the grant for URLLC UL transmission is provided. A DL URLLC interval may be different than an UL URLLC interval. Resource locations that are monitored for UL pre-emption indications may correspond to a time scale of the UL URLLC interval. To match that timeline, it might not always be possible to send an uplink preemption indication signal in the PDCCH region of DL URLLC interval, for example if the downlink and uplink intervals are different. Every x µs where x = UL URLLC interval, the indication may be monitored. An uplink preemption indication signal can be detected in a coherent manner or a non-coherent manner. The pre-emption indication signal can be sent in a reserved resource which is not used for DL data transmission. Alternatively, the configured resource for sending the indication control can be used for data transmission when the indication is not sent. In another example, DL data transmission and indication control may be super-imposed in a time-frequency resource. There can be one group-common control signal sent every x µs interval. A group-specific control signal may be re-transmitted over multiple locations in the frequency domain of a shared channel. A group-specific control signal may indicate a bitmap of time-frequency information of the slot where pre-emption will occur. The time granularity of the bitmap can be a symbol group, and the frequency granularity of the bitmap can be a PRB group or a sub-band BW. Alternatively, multiple group-common indications can be sent based on BW partitions of the carrier or system BW. Each group-common indication can provide pre-emption information over a BW partition for the slot where UL pre-emption will occur.

The configuration of the indication and search space can be notified either via system information or RRC signaling. The configuration includes how many bits, and which BW partition it is intended for. The search space provides the time-frequency location of the indication.

eMBB UEs are configured to monitor pre-emption indications, and signaling that configures the UEs can be higher layer signaling or dynamic signaling. Higher layer signaling includes system information block and RRC signaling. This configuration signaling can be implicit or explicit. For example, it can be explicitly or implicitly derived from system information or DCI of UL grant or RRC signaling.

In addition to time-frequency information, power control command may also be sent as part of the indication. For example, the signaling can include an instruction to the UE to selectively reduce power over the indicated region. For four quantized power levels, a four bit indication can be included.

In another example, HARQ feedback (as part of UL control information) of DL URLLC traffic can also trigger pre-emption of resources from latency tolerant UL traffic, either in the data region (i.e., PUSCH) or in a designated control region (i.e., PUCCH). A base station can signal to latency tolerant UEs in DL whether any adjustment is necessary (e.g., postpone data or defer some uplink control information (UCI) depending on where pre-emption is signaled) in their UL transmission. The indication signal may be triggered by detecting UL URLLC traffic, or by feedback of DL URLLC, and a unified indication channel can be used for this purpose. The indication channel is unified in the sense that either UL control or data transmission of URLLC traffic may cause pre-emption/adjustment/modification of UL control or data transmission of eMBB traffic.

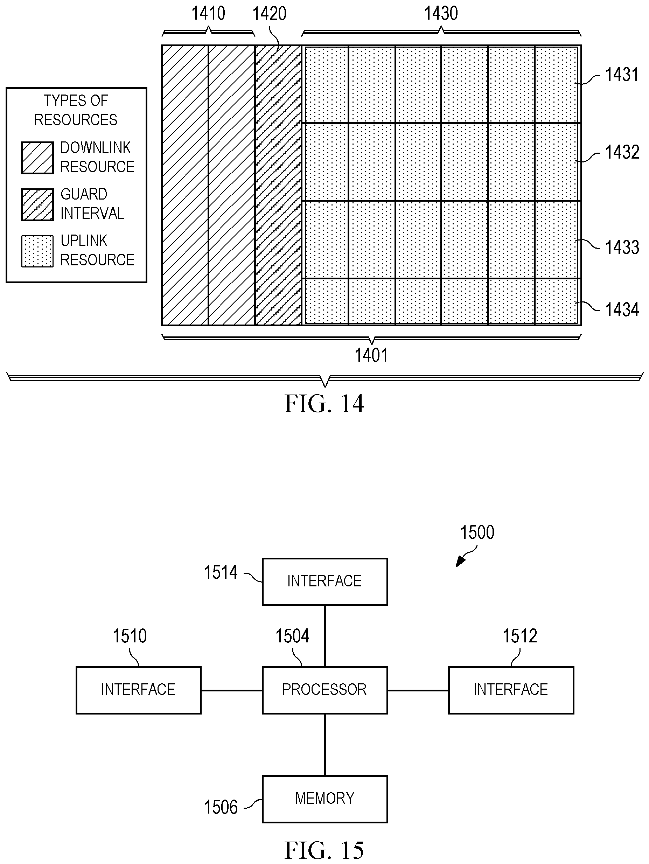

FIG. 14. is a diagram of subframe 1401 that includes uplink resources that are available for grant-free and grant-based transmissions. As shown, the subframe 1401 includes downlink resources 1410, uplink resources 1430, and a guard interval 1420 positioned in-between the downlink resources 1410 and the uplink resources 1430. The uplink resources 1430 include a region 1431 reserved exclusively for grant-free transmissions, a region 1432 available for both grant-free and grant-based transmissions, a region 1433 that is available exclusively for grant-based transmissions, and a region 1434 that carries UCI and/or physical uplink control channel (PUCCH) signaling. In this example, the regions 1431, 1432, 1433, 1434 are frequency division multiplexed with one another. Other examples are also possible. For example, some uplink regions of a subframe may be frequency division multiplexed with one another, and other uplink regions of the same subframe may be time division multiplexed with one another. In a specific example, for a given interval X ms or K symbols, one portion of the interval may include four partitions as listed above, and another portion of the interval may include only a single partition, e.g., the last symbol of an interval can be used for control only.

FIG. 15 is a block diagram of an embodiment processing system 1500 for performing methods described herein, which may be installed in a host device. As shown, the processing system 1500 includes a processor 1504, a memory 1506, and interfaces 1510-1514, which may (or may not) be arranged as shown in FIG. 15. The processor 1504 maybe any component or collection of components adapted to perform computations and/or other processing related tasks, and the memory 1506 may be any component or collection of components adapted to store programming and/or instructions for execution by the processor 1504. In an embodiment, the memory 1506 includes a non-transitory computer readable medium. The interfaces 1510, 1512, 1514 may be any component or collection of components that allow the processing system 1500 to communicate with other devices/components and/or a user. For example, one or more of the interfaces 1510, 1512, 1514 maybe adapted to communicate data, control, or management messages from the processor 1504 to applications installed on the host device and/or a remote device. As another example, one or more of the interfaces 1510, 1512, 1514 maybe adapted to allow a user or user device (e.g., personal computer (PC), etc.) to interact/communicate with the processing system 1500. The processing system 1500 may include additional components not depicted in FIG. 15, such as long term storage (e.g., non-volatile memory, etc.).

In some embodiments, the processing system 1500 is included in a network device that is accessing, or part otherwise of, a telecommunications network. In one example, the processing system 1500 is in a network-side device in a wireless or wireline telecommunications network, such as a base station, a relay station, a scheduler, a controller, a gateway, a router, an applications server, or any other device in the telecommunications network. In other embodiments, the processing system 1500 is in a user-side device accessing a wireless or wireline telecommunications network, such as a mobile station, a user equipment (UE), a personal computer (PC), a tablet, a wearable communications device (e.g., a smartwatch, etc.), or any other device adapted to access a telecommunications network.

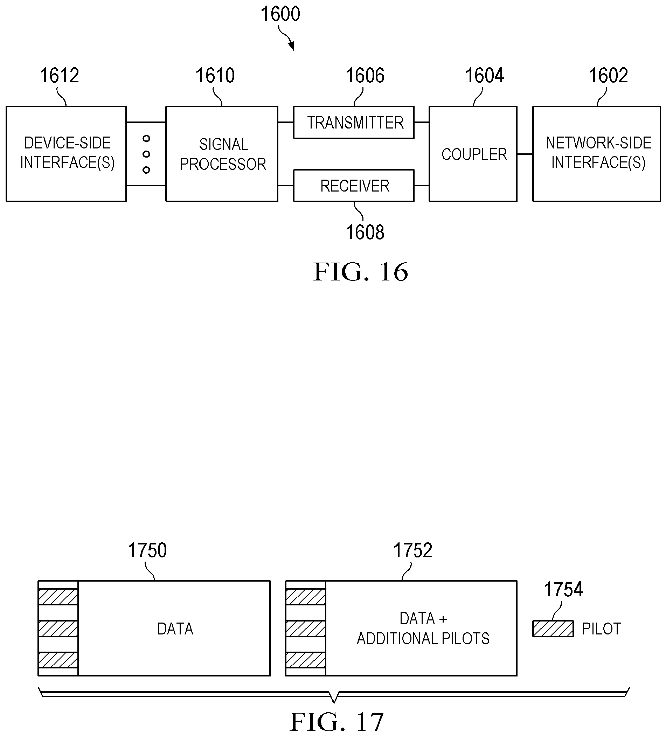

In some embodiments, one or more of the interfaces 1510, 1512, 1514 connects the processing system 1500 to a transceiver adapted to transmit and receive signaling over the telecommunications network. FIG. 16 is a block diagram of a transceiver 1600 adapted to transmit and receive signaling over a telecommunications network. The transceiver 1600 may be installed in a host device. As shown, the transceiver 1600 comprises a network-side interface 1602, a coupler 1604, a transmitter 1606, a receiver 1608, a signal processor 1610, and a device-side interface 1612. The network-side interface 1602 may include any component or collection of components adapted to transmit or receive signaling over a wireless or wireline telecommunications network. The coupler 1604 may include any component or collection of components adapted to facilitate bi-directional communication over the network-side interface 1602. The transmitter 1606 may include any component or collection of components (e.g., up-converter, power amplifier, etc.) adapted to convert a baseband signal into a modulated carrier signal suitable for transmission over the network-side interface 1602. The receiver 1608 may include any component or collection of components (e.g., down-converter, low noise amplifier, etc.) adapted to convert a carrier signal received over the network-side interface 1602 into a baseband signal. The signal processor 1610 may include any component or collection of components adapted to convert a baseband signal into a data signal suitable for communication over the device-side interface(s) 1612, or vice-versa. The device-side interface(s) 1612 may include any component or collection of components adapted to communicate data-signals between the signal processor 1610 and components within the host device (e.g., the processing system 1500, local area network (LAN) ports, etc.).

The transceiver 1600 may transmit and receive signaling over any type of communications medium. In some embodiments, the transceiver 1600 transmits and receives signaling over a wireless medium. For example, the transceiver 1600 may be a wireless transceiver adapted to communicate in accordance with a wireless telecommunications protocol, such as a cellular protocol (e.g., long-term evolution (LTE), etc.), a wireless local area network (WLAN) protocol (e.g., Wi-Fi, etc.), or any other type of wireless protocol (e.g., Bluetooth, near field communication (NFC), etc.). In such embodiments, the network-side interface 1602 comprises one or more antenna/radiating elements. For example, the network-side interface 1602 may include a single antenna, multiple separate antennas, or a multi-antenna array configured for multi-layer communication, e.g., single input multiple output (SIMO), multiple input single output (MISO), multiple input multiple output (MIMO), etc. In other embodiments, the transceiver 1600 transmits and receives signaling over a wireline medium, e.g., twisted-pair cable, coaxial cable, optical fiber, etc. Specific processing systems and/or transceivers may utilize all of the components shown, or only a subset of the components, and levels of integration may vary from device to device.

Referring now to FIG. 17, shown are examples of two very simplified sub-frame structures 1750, 1752 for grant-free transmission. For these examples, the horizontal direction is time and the vertical direction is frequency. In both examples, there are pilot symbols 1754 that are positioned to precede the bulk of the data within the sub-frame. In the first example 1750, all pilot symbols 1754 are transmitted during a first OFDM symbol. In the second example 1752, there are pilot symbols 1754 in the first OFDM symbol, and additional pilot symbols elsewhere within the sub-frame. More generally, in some embodiments, the pilot symbols used for activity detection are near the start of the frame structure. The exact location does not need to be the first symbol. In some embodiments, several symbols near the start of the frame structure include pilot symbols. However, as noted previously, some embodiments may rely on pilot symbols located elsewhere than at the start of the sub-frame.

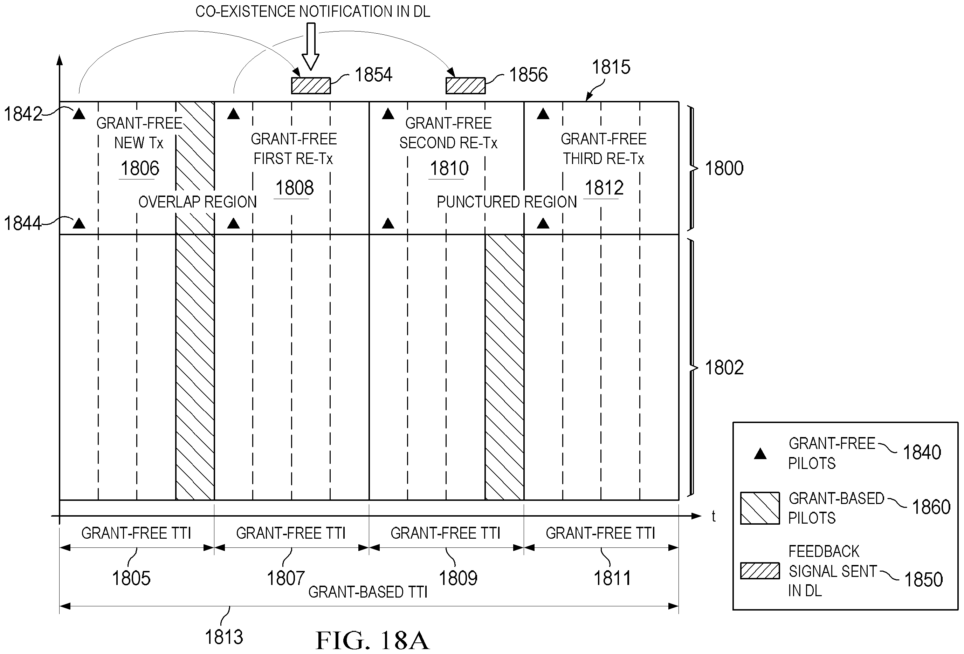

Referring to FIG. 18A, shown is a first example of a frame structure configured for the co-existence of grant-free and grant-based traffic, for example URLL and eMBB, provided by an embodiment of the invention. The vertical dimension is frequency, and the horizontal axis is time, showing a division into OFDM symbols. The first OFDM symbol is labelled 1815. A system bandwidth is divided into two frequency partitions 1800, 1802. The first partition 1800 is available for grant-free traffic and grant-based traffic, with the possibility of overlap, as detailed below. The second partition 1802 is only available for grant-based traffic. For grant-based traffic, shown is a single TTI 1813 having a duration suitable for grant-based traffic, for example having a 0.5 ms TTI duration. The TTI 1813 for grant-based traffic ("grant-based TTI") is sub-divided into four (more generally some two or more) sub-TTIs 1805, 1807, 1809, 1811, each of which corresponds to a TTI for grant-free traffic ("grant-free TTI"). Each of the four grant-free TTIs 1805, 1807, 1809, 1811 has a duration suitable for grant-free traffic, 0.125 ms in the illustrated example. The shorter TTI duration used in the first frequency partition is suitable for grant-free traffic requiring low latency.

For this embodiment and the other embodiments described herein, the TTI size for grant-free traffic, the TTI size for grant-free traffic, the size of the frequency partitions, the number of grant-free TTIs in a grant-based TTI, the number and location of pilots for grant-free and grant-based traffic, the size and shape of resource areas and regions, can be defined on an implementation specific basis.

As noted above, the first partition 1800 is available for use by grant-free traffic. Within the first partition 1800 there are four resource areas 1806, 1808, 1810, 1812 within which grant-free sub-frames can be transmitted during the four grant-free TTIs 1805, 1807, 1809, 1811. Given that grant-free transmission is unscheduled, in general, for a given instance of the frame structure of FIG. 18A, there may or may not be any grant-free transmissions occupying these resources. In the example of FIG. 18A, a new grant-free transmission occurs in resource area 1806, and first, second and third grant-free retransmissions occur in grant-free resource areas 1808, 1810, 1812 respectively. Each of the grant-free transmissions includes pilot symbols at the start of the grant-free sub-frames, as discussed previously with reference to FIG. 17. For example, a grant-free sub-frame transmitted in resource area 1806 contains pilot symbols 1842, 1844 in the first OFDM symbol.

Turning now to grant-based traffic, both partitions 1800, 1802 are available for grant-based traffic. Partition 1802 is available for use free from any overlap with grant-free traffic, whereas grant-based traffic sent in partition 1800 is subject to possible overlap with grant-free traffic. When full utilization is employed, the entirety of both partitions 1800, 1802 is used for grant-based traffic. When partial utilization is employed, the entirety of partition 1802 and a sub-set of the resources within partition 1800 are used for grant-based traffic. Grant-based UEs receive and process a downlink feedback channel 1850 and base their utilization of partition 1800 on the received feedback.

The downlink feedback channel 1850 is used for transmitting the above-discussed notification of activity detection. In the illustrated example, the downlink feedback channel includes a respective feedback opportunity 1854, 1856, during each sub-TTI 1807, 1809. The feedback channel 1850 is used to inform grant-based UEs of the existence of grant-free traffic in an area of possible overlap between grant-free and grant-based traffic so that they can adjust grant-based transmission. The downlink feedback channel is incorporated into downlink transmissions to notify grant-based UEs of which resources need to be clear of grant-based traffic in the shared partition 1800. As a specific example, a set of downlink symbols are transmitted during a period of possible overlap between grant-free uplink traffic and grant-based uplink traffic, and a few tones in one of the set of downlink symbols, for example the third downlink symbol in the set, is reserved for opportunistic feedback. The location of this feedback control signal may be configurable.

The feedback opportunity 1854 can be used to adjust grant-based transmission in resource area 1810 during sub-TTI 1809, and the feedback opportunity 1856 can be used to adjust grant-based transmission in resource area 1812 in sub-TTI 1811. For the illustrated example, there is no feedback during sub-TTI 1805 because it cannot be generated quickly enough following activity detection during the same sub-TTI. However, if it could be generated quickly enough, then feedback could be used to adjust grant-based transmission in sub-TTI 1807. There is no feedback during sub-TTI 1811 as there are no further retransmissions after that sub-TTI.

In some embodiments, the downlink feedback is a broadcast signal for reception by multiple grant-based UEs. This is appropriate for situations where multiple grant-based UEs may experience an overlap with grant-free transmissions.

In some embodiments, the downlink feedback is unicast to a specific grant-based UE. This can be pre-configured to indicate a particular co-existence scenario. This feedback may be different for different grant-based UEs. For example, the breakdown between grant-based vs. grant-free traffic can be different in different bands for different grant-based UEs.

In some embodiments, the downlink feedback is sent by puncturing downlink data. Alternatively, dedicated resources can be employed for the downlink feedback.

In some embodiments, the feedback is sent on an on demand basis, only when necessary to indicate grant-free transmission in the overlap region. On the receiver side, the feedback signal needs to be monitored on an ongoing basis.

In the illustrated example, there is a grant-free transmission in sub-frame 1806. The feedback opportunity 1854 in the second sub-TTI 1807 is used to notify grant-based UEs of the existence of the grant-free transmission. Based on each grant-free UE being configured to transmit a new transmission and three retransmissions in this example, the notification is equivalently an indication of the existence of retransmissions in resource areas 1810, 1812. In response, the grant-based UEs do not transmit within resource areas 1810, 1812. The overall result is that grant-based traffic is present in partition 1802 and is also present in resource areas 1806, 1808 within partition 1800. A single grant-based transport block may be transmitted in partitions 1800, 1802, and/or different grant-based transport blocks maybe transmitted in each of partitions 1800, 1802. In some embodiments, the entire structure of FIG. 18A can be considered a single grant-based transport block. Resource areas 1810, 1812 are punctured from the grant-based perspective, meaning that grant-based traffic is not transmitted using those resources. It can be seen that grant-based traffic transmitted in resource areas 1806, 1808 overlaps with the initial grant-free transmission and first grant-free retransmission, but that as a result of the notification, there is no overlap in resource areas 1810, 1812. As such, the second and third retransmissions are not subject to interference from the grant-based traffic.

Alternatively, the resources available for grant-based transmission can be viewed as including the resources within partition 1802, and any of the resource areas 1806, 1808, 1810, 1812 in respect of which feedback indicating an overlap has not been received.

In a specific example, partition 1800 includes 10 resource blocks, and partition 1802 includes 50 resource blocks. When feedback is received indicating overlap, the 10 resource blocks in partition 1800 are not used during a subsequent TTI.

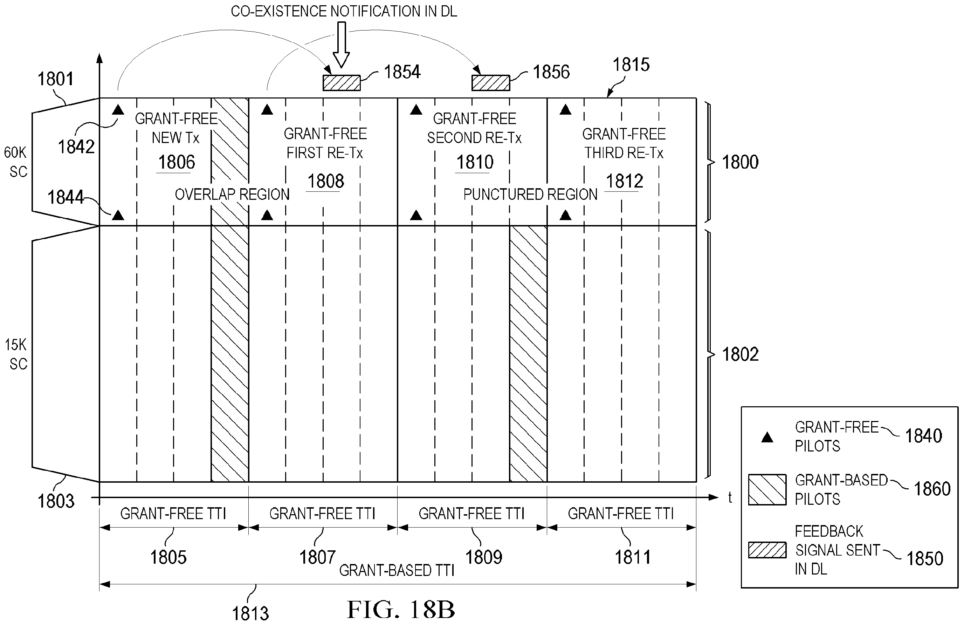

In some embodiments, the two partitions 1800, 1802 are in respective sub-bands having different sub-carrier spacings. An example of this is depicted in FIG. 18B where the first frequency partition 1800 operates within a sub-band 1801 with a numerology having a 60 kHz sub-carrier spacing, whereas the second frequency partition 1802 operates within a sub-band 1803 with a numerology having a 15 kHz sub-carrier spacing. In some embodiments, a grant-based UE transmitting in the 60 kHz band is scheduled separately from a grant-based UE transmitting in the 15 kHz band. In another example, all traffic including grant-based and grant-free traffic uses a 30 kHz sub-carrier spacing. In another example, grant-free traffic uses a 30 kHz sub-carrier spacing and grant-based traffic uses a 15 kHz sub-carrier spacing. In another example, grant-free traffic uses a 60 kHz sub-carrier spacing and grant-free traffic uses a 30 kHz sub-carrier spacing. In another example, both grant-free and grant-based traffic may use a common sub-carrier spacing, such as 60 kHz or 120 kHz, with different TTI durations.

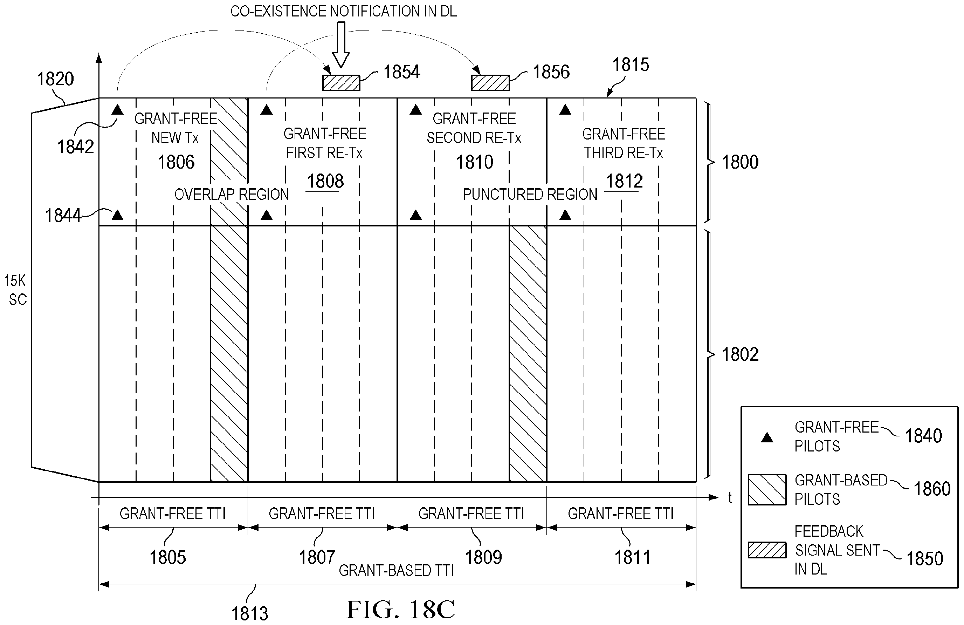

In some embodiments, the partitions 1800, 1802 are within a single sub-band. An example is depicted in FIG. 18C where two frequency partitions 1800, 1802 are within a single band 1820 with a 15 kHz sub-carrier spacing. Unlike the FIG. 18A example, in the FIG. 18B example, the grant-free partition 1800 and grant-based partition 1801 employ the same numerology, however their TTI durations can still be different as detailed above. This embodiment is particularly suitable for the case where a transport block for a single UE is scheduled over both partitions 1800 and 1802.

As detailed above, pilot symbols may be included at an early portion of the grant-free sub-frame structure. If a short TTI is employed, the channel may not change much, and pilot symbols at the beginning of the TTI are sufficient for channel estimation as per the example of FIG. 17. Activity detection may be performed based on the pilot symbols at the beginning of the TTI, or may also be based on later pilot symbols as described previously. Effective grant-free SINR for a TTI can be reliably estimated using pilot signals placed at the beginning of the TTI because time fading is minimal within a short TTI

In some embodiments, the pilot sequences are sufficient to identify the number and identity of active grant-free UEs. In some embodiments, where the grant-free UE can be uniquely identified, and where specific resources assigned to retransmissions by that grant-free UE can be determined, the feedback instructs the grant-based UE to puncture only the specific resources occupied by the active grant-free UE. Examples are provided below. This approach can be applied to any of the embodiments described herein.

In other embodiments, the pilot sequences are not uniquely assigned to grant-free UEs. In this case, the pilot sequences can still be used to estimate the number of active grant-free UEs, although an exact determination may not be possible. In such embodiments, partition 1800 over the entire grant-free TTI can be punctured (e.g. all of region 1810, 1812) (i.e., not used for grant-based traffic) when a number of active grant-free UEs is greater than a threshold, or when a predicted number of retransmissions in a grant-free TTI is greater than a threshold.

In some embodiments, to enhance activity detection reliability, grant-free UEs may use autonomous power boost on pilot symbols so that if they collide with grant-based data, they can still be reliably estimated. Alternatively, grant-free pilot symbols may be exempted from overlap with grant-free traffic.

In some embodiments, grant-based pilot symbols and grant-free pilot symbols are configured such that the grant-free pilot symbols do not overlap with grant-based pilot symbols. Referring again to FIG. 18A, grant-based pilot symbols are indicated at 1860, and it can be seen that there is no overlap between the grant-based pilot symbols 1860 and the grant-free pilot symbols 1840. The number of grant-based pilot symbols 1860 in this and other embodiments is implementation specific. A longer grant-based TTI would benefit from more pilot symbols. More generally, grant-free pilot symbols and grant-based pilot symbols can also be mapped to any set of OFDM symbols, and may overlap.

In the described embodiments, grant-based pilot symbols are mapped to specific OFDM symbols. Note that it is not necessarily the case that entire OFDM symbols are mapped to by pilot symbols. The pilot symbols may be multiplexed with data in one or more OFDM symbols. More generally still, for this embodiment and the other embodiments described herein, grant-based pilot symbol location can be arbitrary, can be scattered, can overlap with grant-free pilot symbols or traffic, can be confined to one or more OFDM symbols per scheduling interval etc. In the described embodiments, grant-based pilot symbols are mapped to specific OFDM symbols.

FIG. 18A shows resource areas for initial transmissions and specific grant-free retransmissions. In other embodiments described below, resource areas are for initial transmission and grant-free retransmissions, generally, and in other embodiments resource areas are not dedicated to initial transmissions as opposed to retransmissions. For any of the embodiments described herein, the actual size of these resource areas can be arbitrary. In a specific example, a resource area for new transmissions may be larger than a region for first retransmissions, and a resource area for first retransmissions may be larger than a resource area for second retransmissions.

In some embodiments, grant-based pilot symbols and grant-free pilot symbols are configured such that the grant-free pilot symbols may overlap with grant-based pilot symbols. If overlap is permitted, a covariance matrix of grant-free and grant-based pilot sequence can be further exploited to estimate the SINR of grant-free traffic.

In some embodiments, the timing of new grant-free transmissions is aligned as between all grant-free UEs. Referring to FIG. 18A, a grant-based TTI 1813 is aligned with four grant-free TTIs 1805, 1807, 1809, 1811. All new grant-free transmissions occur in the first TTI 1805. Re-transmissions occur in the subsequent TTIs 1807, 1809, 1811. Such a system simplifies activity detection, because a base station can identify whether a transmission is a new transmission or a retransmission based on the TTI in which it occurs. In addition, the entirety of partitions 1800 and 1802 can be used for grant-based traffic when there is no grant-free transmission. However, a disadvantage is the increased latency due to the fact that initial transmissions must wait for the start of a longer grant-based TTI.

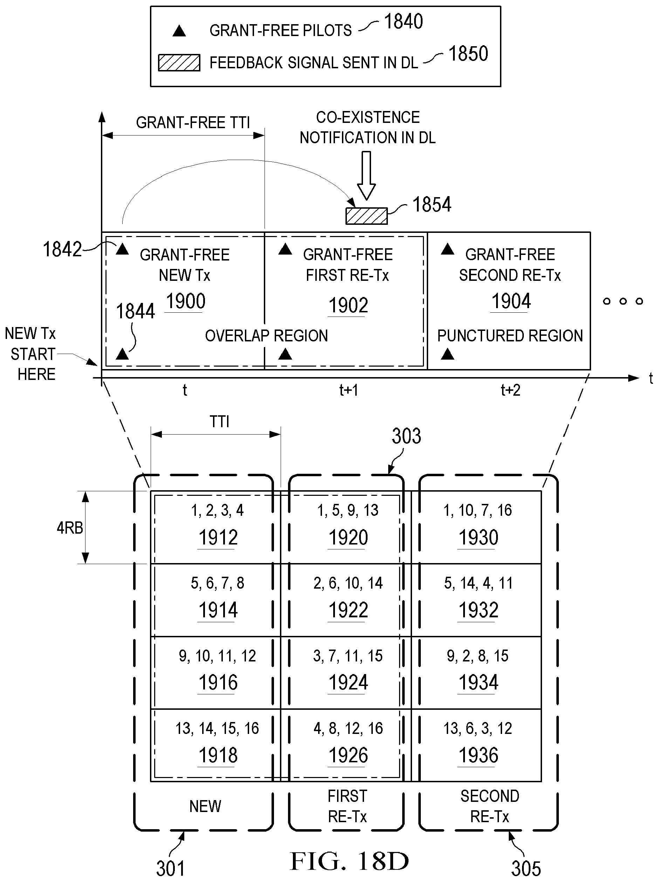

In some embodiments, the resources used by grant-free UEs follow a certain mapping, known to both the UEs and the base station when they transmit new transmissions or retransmissions. An example is shown in FIG. 18D which shows a mapping to resource areas 1900, 1902, 1904 during grant-free TTIs 1901, 1903, 1905 for new transmissions, first retransmissions and second retransmissions. Each resource area has 16 resource blocks. The resource blocks of each resource area are divided into four regions each containing four resource blocks. Four resource blocks is the unit of resource assigned for each UE if it has data to transmit for this example. This allocation may be based on average payload requirement and maybe updated. The regions for TTI 1901 are indicated at 1912, 1914, 1916, 1918. Each region supports up to four grant-free UEs in this example. A list of four numbers depicted for each region represents a set of four UEs mapped to that region. A UE will make grant-free transmissions using the regions to which it is mapped in a given TTI, if it has data to send. However, the UE may or may not have a transmission to make in a given region to which it is mapped. In the illustrated example, for initial transmissions, during TTI 1901, UEs 1, 2, 3, 4 are mapped to region 1912; UEs 5, 6, 7, 8 are mapped to region 1914; UEs 9, 10, 11, 12 are mapped to region 1916; and UEs 13, 14, 15, 16 are mapped to region 1918. From one TTI to the next, the mapping changes. For first retransmissions, during TTI 1903, UEs 1, 5, 9, 13 are mapped to region 1920; UEs 2, 6, 10, 14 are mapped to region 1922; UEs 3, 7, 11, 15 are mapped to resource area 1924; and UEs 4, 8, 12, 16 are mapped to region 1926. For second retransmissions, during TTI 1905, UEs 1, 10, 7, 18 are mapped to region 1930; UEs 5, 14, 4, 11 are mapped to region 1932; UEs 9, 2, 8, 15 are mapped to resource area 1934; and UEs 13, 6, 3, 12 are mapped to region 1936.

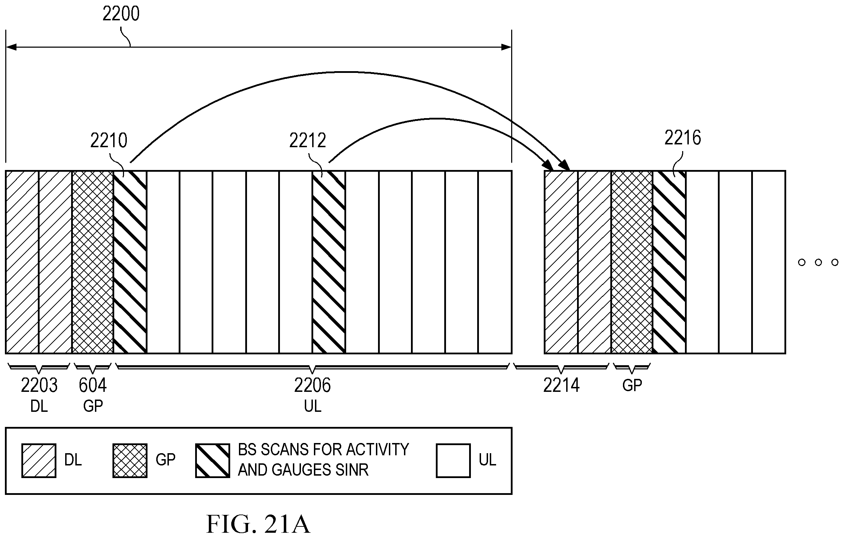

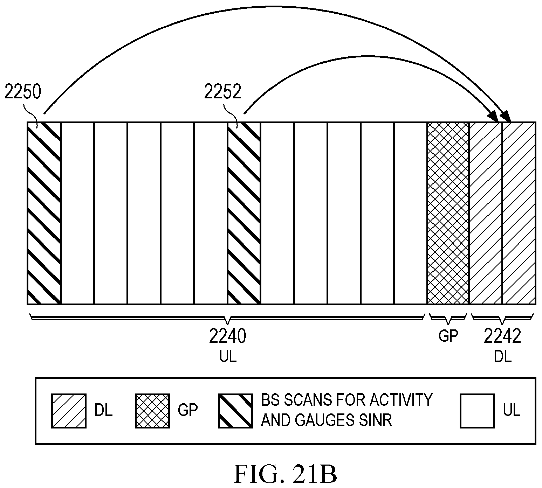

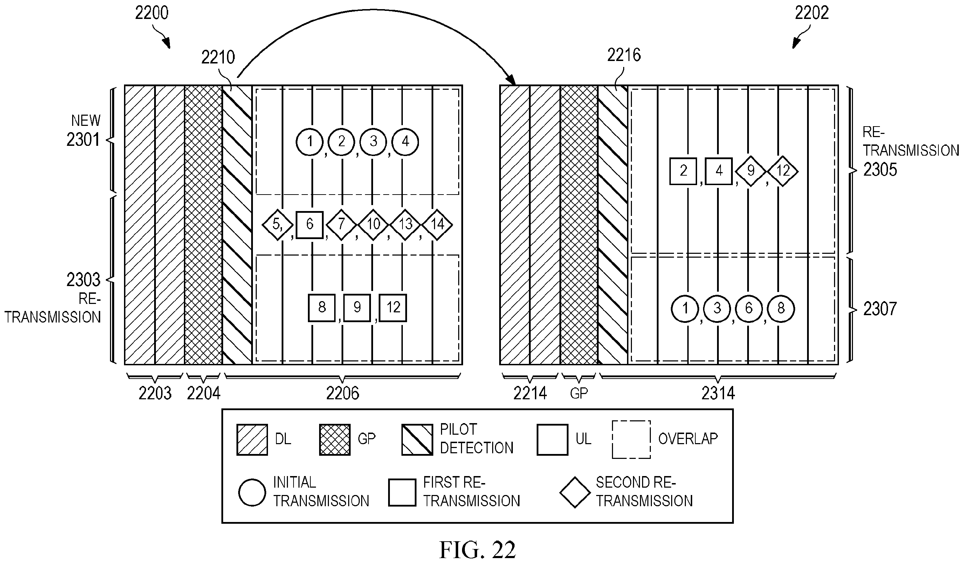

In some embodiments, where the base station can determine which UE is detected (for example using the pilot sequence based approach referred to below), based on knowledge of a mapping such as that described with reference to FIG. 18D, the base station knows precisely the resources required by that UE for its second retransmission. In that case, the base station can instruct grant-based UEs to only puncture those resources. For the example of FIG. 18D, if UE1 is detected in region 1912, feedback is sent on the downlink during TTI 1903, and grant-free UEs are instructed to puncture uplink transmissions in region 1930 which is where UE1 is expected to make its second retransmission. This mapping approach can be applied to any of the embodiments described herein, including the TDD embodiments described below with reference to FIGS. 21A, 21B and 22, and does not require the specific mapping of FIG. 18D.

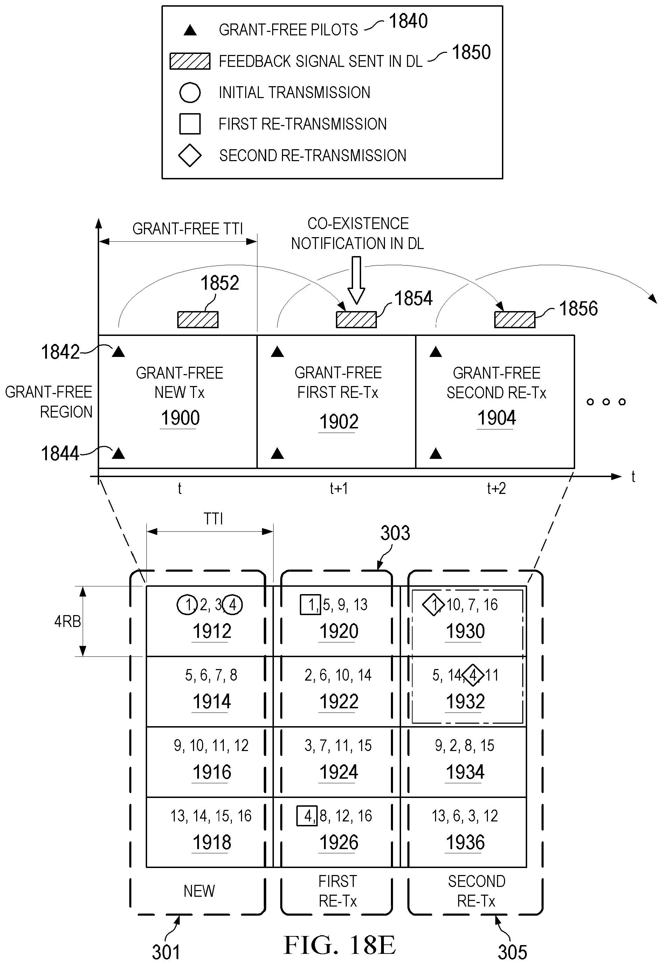

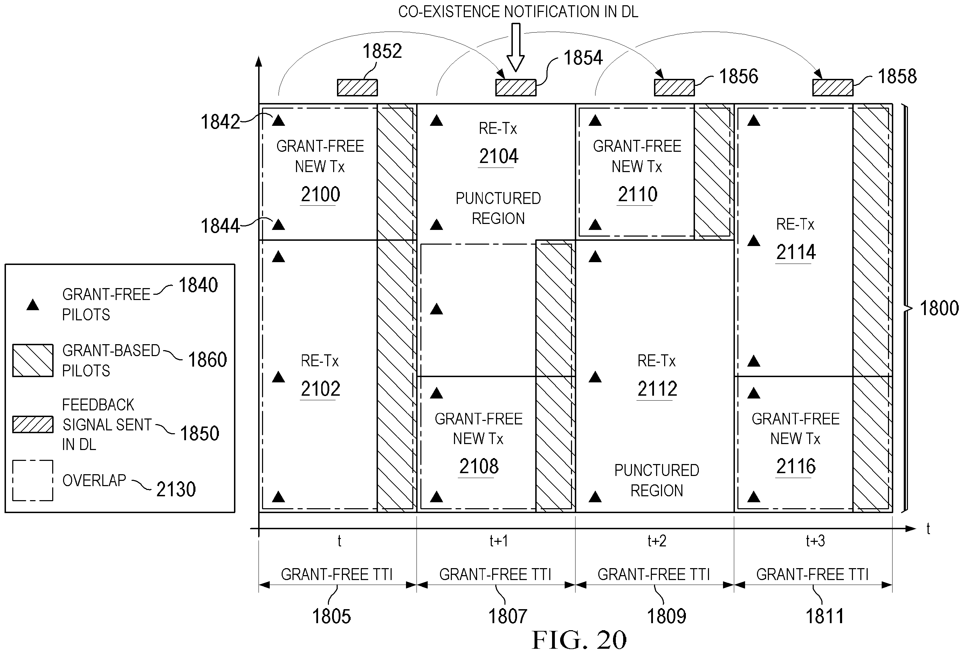

Referring now to FIG. 18E, shown is another example of mapping of UEs to resource areas. The mapping of UEs to three resource areas is the same as the mapping of UEs to resource areas 1900, 1902, 1904 described with reference to FIG. 18D, and as such the mapping will not be described again in detail. However, for this embodiment, there is no restriction on when a first grant-free transmission is made as opposed to a first or second retransmission. Thus UE1, for example, can make an initial transmission in any of regions 1912, 1920, 1930. A specific example is depicted in which initial transmissions for UEs 1 and 4 are represented by circled numbers, first retransmissions for UEs 1 and 4 are represented by numbers with squares around them, and second retransmissions for UEs 1 and 4 are represented by numbers with diamonds around them. With this embodiment, the base station detects new transmissions from UEs 1 and 4 in region 1912 (for example using the pilot sequence based approach described below), and instructs grant-based UEs to puncture the regions 1930, 1932 containing the second retransmissions for UEs 1 and 4. More generally, a distinction can be made between detected activity in respect of which there are enough retransmissions remaining for feedback to be useful, and detected activity in respect of which there are not enough retransmissions remaining for feedback to be useful. This can be done using the pilot sequence based approach, for example. This approach can also be applied in embodiments in which resource areas are defined for initial retransmissions, and retransmissions generally (for example the embodiment of FIG. 20 described below).

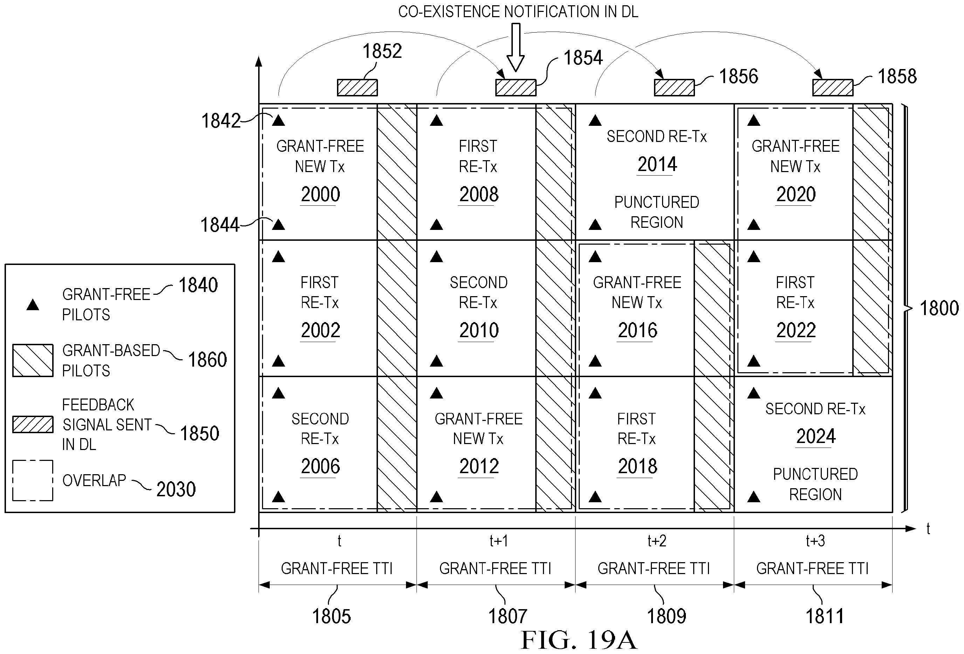

In some embodiments, rather than requiring initial grant-free transmissions to be aligned, a logical division of a bandwidth available for grant-free transmission is made between portions available for new transmissions, and those available for retransmissions. A first example is depicted in FIG. 19A, which shows a specific logical division within the overlap partition 1800. Elements that are in common with FIGS. 18A-18C are commonly numbered. This logical division may be semi-statically configured.

During the first grant-free TTI 1805 in FIG. 19A, the partition 1800 is divided into a resource area 2000 for new transmissions, a resource area 2002 for first retransmissions, and a resource area 2006 for second retransmissions. During the second grant-free TTI 1807, the partition 1800 is divided into a resource area 2008 for initial transmissions, a resource area 2010 for second retransmissions, and a resource area 2012 for new retransmissions. During the third grant-free TTI 1809, the partition 1800 is divided into a resource area 2014 for second transmissions, a resource area 2016 for new transmissions, and a resource area 2018 for first retransmissions. During the fourth grant-free TTI 1811, the partition 1800 is divided into a resource area 2020 for new transmissions, a resource area 2022 for first retransmissions, and a resource area 2024 for second retransmissions. With this approach, a grant-free UE can make an initial transmission in any of the four grant-free TTIs. Each resource area for new transmissions has a corresponding area for first retransmissions and a corresponding area for second retransmissions. For example, resource area 2000 for first retransmissions has a corresponding area 2008 for first retransmission and a corresponding area 2014 for second retransmissions.

After an initial transmission is made in a resource area reserved for first transmissions, retransmissions are sent in the corresponding resource areas for retransmissions. In the example of FIG. 19A, each grant-free UE makes two retransmissions, but a similar approach can be used for another number of retransmissions. For example, a grant-free UE that makes an initial transmission using resource area 2000 makes its first and second retransmissions using resource areas 2008 and 2014.

With this embodiment, the pilot symbols of the first grant-free transmissions are used by the base station for activity detection and optionally to assess channel quality, for the grant-free transmission. If activity is detected, or if activity is detected and channel quality is poor in respect of a new transmission made in one of the resource areas reserved for new transmissions (as defined by some threshold or criterion) then the downlink feedback channel is used to indicate that the corresponding resource area reserved for second retransmissions should be cleared of grant-based traffic. For example, if a new transmission occurs in resource area 2000 for which channel quality is determined to be poor, feedback is sent using feedback opportunity 1854 which indicates resource area 2014 should be clear of grant-based traffic. In the illustrated example, feedback is also used to indicate that resource area 2024 should be clear of grant-based traffic. In some embodiments, the first retransmission area is also or alternatively cleared of grant-based traffic if feedback can be generated and received/processed quickly enough This embodiment includes the optional feature of only generating the downlink feedback where the channel quality is poor, for example when the SINR is below a threshold. This feature can be added to any of the embodiments described herein relating to controlling the transmissions by grant-based UEs.

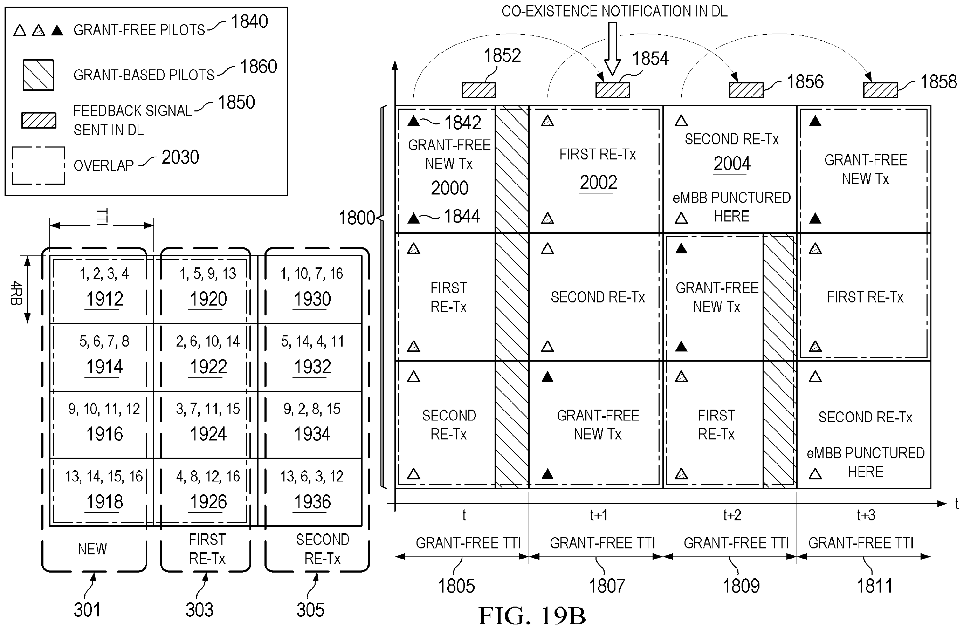

FIG. 19B shows an example of a mapping of UEs to the resource areas 2000, 2002, 2004 of FIG. 19A. Such a mapping can be defined for any set of resource areas. The mapping can be different for different resource areas, and/or for different TTIs. In some embodiments, new transmissions and retransmissions are mapped differently to avoid repeated collisions. The mapping is the same as the mapping of UEs to resource areas 1900, 1902, 1904 described with reference to FIG. 19D, so it will not be described again in detail.

In some embodiments, all grant-free UEs are configured to make the same number of retransmissions. Alternatively, differing numbers of retransmissions can be configured for different UEs. For example, some UEs may be configured with one retransmission, and other UEs maybe configured with two retransmissions. The frequency of activity by UEs of different categories of UEs may differ significantly. For example, there may be more activity among UEs that transmit one retransmission compared to UEs that transmit two retransmissions. This could have the effect of some retransmission regions being underutilized. In some embodiments, resource areas are not dedicated specifically to be a certain retransmission (e.g. first or second), but rather some resource areas are dedicated to new transmissions, and other resources are dedicated to retransmissions of any type. Having such common retransmission resource areas may yield improved resource utilization. In some embodiments, based on pilot sequences, using for example an approach detailed below, the base station can determine which category of UE a given UE belongs to, for example a category with one retransmission as opposed to a category with two retransmissions. This information can be used by the base station to cause the appropriate region to be punctured by grant-based UEs.

An example of this approach is depicted in FIG. 20. During the first grant-free TTI 1805, the partition 1800 is divided into a resource area 2100 for new transmissions, and a resource area 2102 for retransmissions generally. The resource area 2102 for retransmissions and the other such resource areas may be utilized for a grant-free UE to transmit a first retransmission or a second retransmission (more generally still any retransmission). During the second grant-free TTI 1807, the partition 1800 is divided into a resource area that includes areas 2104 for retransmissions, and a resource area 2108 for new transmissions. During the third grant-free TTI 1809, the partition 1800 is divided into a resource area 2110 for new transmissions, and a resource area 2112 for retransmissions. During the fourth grant-free TTI 1811, the partition 1800 is divided into a resource area 2114 for retransmissions, a resource area 2116 for new transmissions. With this approach, a UE can make an initial transmission in any of the four grant-free TTIs. After an initial transmission is made, retransmissions are sent in the resource areas reserved for retransmissions in subsequent grant-free TTIs. In the illustrated example, feedback is used to indicate that a part of resource area 2104 and resource area 2112 should be clear of grant-based traffic. In this example, a determination has been made that a retransmission will occur in a specific part of resource area 2104, and only that specific part of resource area 2104 is punctured. A mapping such as described by way of example with reference to FIG. 19B can be defined for embodiments that take the approach of FIG. 20.

As noted above, in some embodiments, the grant-free pilot symbols are used to distinguish between a initial transmission and a specific retransmission and/or to distinguish between different categories of UEs in terms of number of retransmissions expected. For a given UE, a first grant-free pilot symbol (or a pilot symbol from a first pool of pilot symbols) is used with an initial transmission, and a second grant-free pilot symbol (or a pilot symbol from a second pool of pilot symbols) is used with a retransmission or a specific retransmission. See, for example, commonly assigned U.S. application no. 15/088,607 filed April 1, 2016, entitled "System and Method for Pilot Assisted Grant-free Uplink Transmission Identification", hereby incorporated by reference in its entirety. In some embodiments, this information is used to more precisely determine the resource used for the grant-free transmission such that only that precise resource need be punctured from the grant-based perspective.

### Grant-free self-contained TDD frame structure

In another embodiment, an activity based feedback mechanism is employed in respect of transmissions by grant-free UEs that employ a self-contained time division duplex (TDD) frame structure. An example is depicted in FIG. 21A which shows a grant-free sub-frame 2200 having a downlink segment 2203, a guard period 2204, and an uplink segment 2206. Such a sub-frame structure might, for example, be based on a 60 kHz sub-carrier spacing with 0.1 to 0.2 ms duration. If there are K symbols in the uplink segment, a base station can detect activity and estimate SINR thresholds for a subset N << K symbols. N could be as low as N = 1. In the illustrated example, the base station detects activity during two symbols where pilot symbols are mapped (the first 2210 and seventh 2212). The base station can then send feedback in the downlink segment 2214 of the next sub-frame 2216.

In another embodiment, the uplink segment precedes the downlink segment, and the feedback may be sent in the downlink segment in the same sub-frame. An example is depicted in FIG. 21B, in which measurements take place during uplink segment 2240 on symbols 2250, 2252, and feedback is sent during downlink segment 2242 of the same sub-frame.

In some embodiments, the feedback described is received by the grant-free UE that made the transmission, and can be used by the grant-free UE to reduce its retransmission by sending fewer than its default number of retransmissions. For example, if the base station detects the grant-free UE, and detects an SINR that is greater than a threshold and/or low activity/collision among grant-free UEs, the base station sends the feedback, and the grant-free UE may be configured to not retransmit, or to make a reduced number of retransmissions. The feedback functions as a pseudo-acknowledgement. It is not a full acknowledgement because it is not based on successfully decoding of received data, but rather is based on a channel quality measurement. This threshold based approach can be applied to any of the embodiments described herein to reduce retransmission by grant-free UEs.

It may be possible that some grant-free UEs experience a very good channel, and a very low error rate, e.g. <1X 10⁻⁶ is predicted based on measurement. In such a case, the base station can use the feedback to provide the pseudo acknowledgement to the UEs indicating that they do not need to retransmit. Alternatively, or in addition, the base station can use the feedback to provide the pseudo acknowledgement to the UEs indicating they can stop retransmitting.

Another example is depicted in FIG. 22, which builds upon the example of FIG. 21, and employs common reference numerals. Example transmissions of UEs numbered 1 to 12 are depicted. Initial transmissions are represented by circled numbers, first retransmissions are represented by numbers with squares around them, and second retransmissions are represented by numbers with diamonds around them. With the example of FIG. 22, for frame 2200 there is a dedicated sub-band 2301 for initial transmissions, and a dedicated sub-band 2303 for retransmissions. In frame 2202 there are dedicated sub-bands 2305, 2307 for retransmissions and new transmissions respectively. It is noted that the resource area definitions and mappings described previously for example with reference to FIGS. 19A-19E, 20A, 20B, and 21 and generalizations thereof, and the use of feedback to adjust grant-based UE transmission can similarly be applied in a TDD context.

In the illustrated example, the base station gauges channel quality for the 12 UEs during the pilot period 2210, and sends feedback during the following downlink period 2214 For this example, the base station has provided feedback to some UEs instructing them to retransmit fewer than their preconfigured number of retransmissions. In the illustrated example, during the first sub-frame 2200, UEs 1, 2, 3 and 4 make initial transmissions. Feedback is sent during downlink portion 2214 of the second sub-frame to UEs 1 and 3 indicating not to retransmit. As such, UEs 1 and 3 can use the next frame 2202 for initial transmissions of additional data if desired. During the first sub-frame 2200, UEs 6, 8, 9 and 12 are making first retransmissions, and UEs 5, 7, 10, 13, 14 are making second retransmissions. Feedback is sent during downlink portion 2214 of the second sub-frame 2202 indicating that UEs 6 and 8 are to stop retransmitting. The result is that of the UEs 6, 8, 9 and 12 that made a first retransmission, only UEs 9 and 12 make second retransmissions in the second sub-frame 2202. The next frame 2202 can be used for initial transmissions for UEs 6 and 8 if they have more data to send.

It is noted that while this approach of reducing/eliminating retransmissions is described in the context of the TDD examples of FIGS. 21A and 21B, and 22, the same approach can be used in the other embodiments described herein, in addition to, or instead of, using the feedback to control grant-free transmission.

In some embodiments, for robustness, the downlink control information is transmitted using resources dedicated to the control channel and not used for other purposes. In some embodiments, grant-free and grant-based traffic may share the downlink control resources in a TDM/FDM fashion.

### Feedback message

As detailed above, the grant-free partition may consist of several resource areas where UEs are mapped. The feedback message may be a function of the number of resource areas, and whether the feedback concerns a new transmission or a re-transmission. For example, in one embodiment, the feedback message has two fields. The first field denotes whether the feedback concerns new transmissions or retransmissions, and the second field is a bitmap of the resource areas. More detailed feedback is also possible, depending on UE capability.

In many of the embodiments described, the feedback is used to indicate when grant-based UEs are to stop transmitting in an area of overlap. In another embodiment, grant-based traffic can be scheduled based on the feedback to avoid or mitigate collisions with grant-free retransmissions.

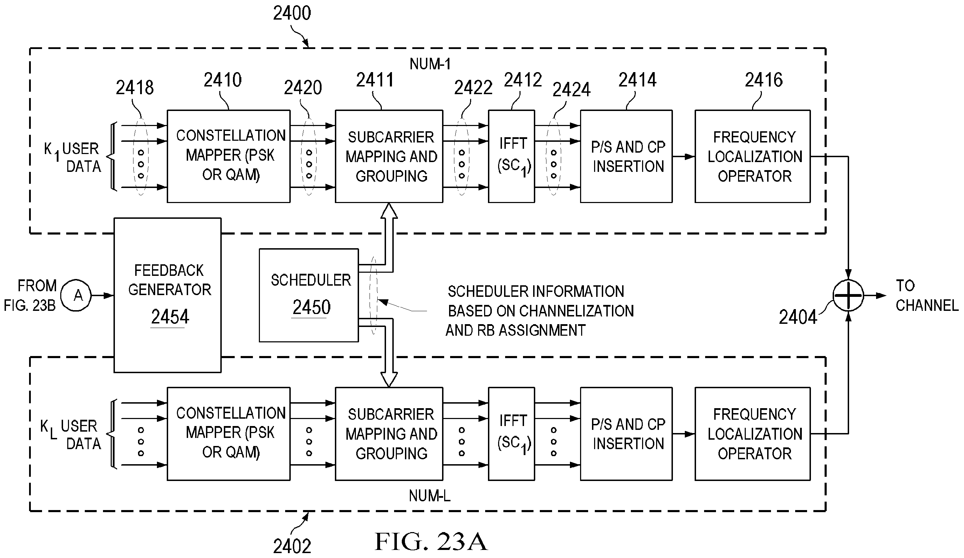

Referring now to FIG. 23A, shown is a simplified diagram of part a base station that can operate using multiple numerologies. In this example, there are L supported numerologies, where L >=2, each numerology operating over a respective sub-band with a respective sub-carrier spacing. However, the approaches described herein can also be applied when there is only a single numerology.

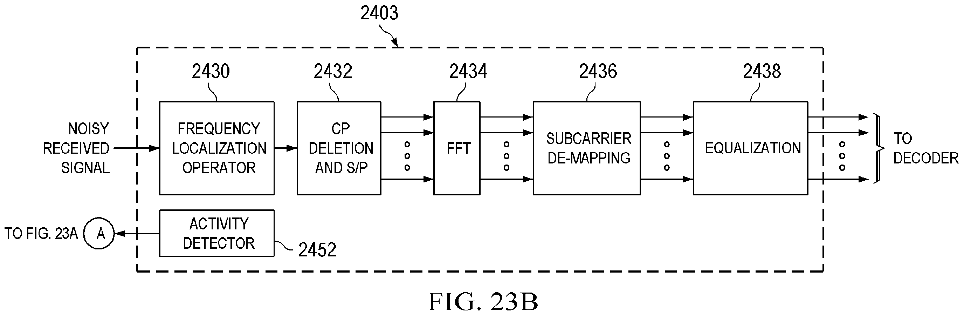

For each numerology, there is a respective transmit chain 2400, 2402. FIG. 23A shows simplified functionality for the first and Lth numerology; the functionality for other numerologies would be similar. Also shown in FIG. 23B is simplified functionality for a receive chain 2403 for a receiver operating using the first numerology.

The transmit chain 2400 for the first numerology includes a constellation mapper 2410, subcarrier mapping and grouping block 2411, IFFT 2412 with subcarrier spacing SC₁, pilot symbol and cyclic prefix insertion 2414, and frequency localization operator 2416 (for example filtering, sub-band filtering, windowing, sub-band windowing). Also shown is a scheduler 2400 that performs scheduling. It is noted that depending on the frequency localization operator implementation, different guard zones may be needed at the two edges of the spectrum and/or between sub-bands with different numerologies (i.e. different sub-carrier spacings). In some embodiments, the guard zones are determined taking into account frequency localization capabilities of both the transmitter and receiver. Also shown is a feedback generator 2454.

In operation, constellation mapper 2410 receives UE data (more generally, UE content containing data and/or signalling) for K₁ UEs, where K₁ >=1. The constellation mapper 2410 maps the UE data for each of the K₁ UEs to a respective stream of constellation symbols and outputs this at 2420. The number of UE bits per symbol depends on the particular constellation employed by the constellation mapper 2410. In the example of quadrature amplitude modulation (QAM), 2 bits from for each UE are mapped to a respective QAM symbol.

For each OFDM symbol period, the subcarrier mapping and grouping block 2411 groups and maps the constellation symbols produced by the constellation mapper 2410 to up to P inputs of the IFFT 2412 at 2422. The grouping and mapping is performed based on scheduler information, which in turn is based on channelization and resource block assignment, in accordance with a defined resource block definition and allocation for the content of the K₁ UEs being processed in transmit chain 2400. P is the size of the IFFT 2412. Not all of the P inputs are necessarily used for each OFDM symbol period. The IFFT 2412 receives up to P symbols, and outputs P time domain samples at 2424. Following this, in some implementations, time domain pilot symbols are inserted and a cyclic prefix is added in block 2414. The frequency localization operator 2416 may, for example, apply a filter f₁(n) which limits the spectrum at the output of the transmit chain 2400 to prevent interference with the outputs of other transmit chains such as transmit chain 2402. The frequency localization operator 2416 also performs shifting of each sub-band to its assigned frequency location.

The functionality of the other transmit chains, such as transmit chain 2402 is similar. The outputs of all of the transmit chains are combined in a combiner 2404 before transmission on the channel.

The activity detector 2452 performs activity detection and/or SINR measurement to detect and measure the signal quality of uplink transmissions from grant-free UEs. The feedback generator 2454 generates feedback based on an output of activity detector 2452 (described below as part of the transmit chain) in accordance with one of the methods described herein. This can be transmitted by puncturing user data at the input to the constellation mappers, or on a dedicated downlink feedback channel.

FIG. 23B shows a simplified block diagram of a receive chain for of a base station receiving using a first numerology depicted at 2403. This functionality would be replicated where multiple numerologies are supported. The receive chain 2403 includes frequency localization operator 2430, cyclic prefix deletion and pilot symbol processing 2432, fast Fourier transform (FFT) 2434, subcarrier de-mapping 2436 and equalizer 2438. Each element in the receive chain performs corresponding reverse operations to those performed in the transmit chain. Also shown is activity detector 2452 that performs activity detection using any one of the methods described herein. The output of the activity detector 2452 is passed to the feedback generator 2454.

The transmit chain of a grant-free UE and a grant-based UE may be similar to that of a base station although there would be no scheduler and no feedback generator 2452. Also, for a grant-free UE typically a single numerology is supported; a grant-based UE may support one or multiple numerologies

The receive chain of a grant-free UE and a grant-based UE may be similar to that of a base station although again for a grant-free UE typically a single numerology is supported; a grant-based UE may support one or multiple numerologies. In place of the activity detector 2452, a grant-free UE may have a feedback processor that processes received feedback and modifies retransmission behaviour using of the methods detailed previously. Alternatively, or in addition, a grant-based UE may have a feedback processor that processes received feedback and modifies its transmissions using one of the methods detailed previously.

## Claims

1. A method for mitigating interference, the method comprising:
detecting (410), by a base station (110), a grant-free uplink transmission over a first uplink resource **characterized by**
determining (420), by the base station (110), that a retransmission of the grant-free uplink transmission will occur over a second uplink resource, the second uplink resource having been previously scheduled to carry a grant-based uplink transmission from a user equipment, UE (120); and
transmitting (430), by the base station (110), a signal over a downlink resource, the signal instructing the UE (120) to adjust a transmission parameter of the grant-based uplink transmission.

2. The method of claim 1, wherein the first uplink resource and the second uplink resource each include one or more orthogonal frequency division multiplexed (OFDM) symbols.

3. The method of any of claims 1 to 2, wherein the signal instructs the UE (120) to adjust the transmission parameter of the grant-based uplink transmission by instructing the UE (120) to reduce a transmit power level of the grant-based uplink transmission during the second uplink resource.

4. The method of any of claims 1 to 3, wherein the signal instructs the UE (120) to adjust the transmission parameter of the grant-based uplink transmission by instructing the UE (120) to mute the grant-based uplink transmission during the second uplink resource.

5. The method of any of claims 1 to 4, wherein the grant-based uplink transmission was previously scheduled to be performed over a set of uplink resources that includes the second uplink resource and one or more additional uplink resources, and
wherein the signal further instructs the UE (120) to adjust the transmission parameter of the grant-based uplink transmission by instructing the UE (120) to mute the grant-based uplink transmission over the second uplink resource and to adapt a modulation and coding scheme, MCS, level used to transmit portions of the grant-based uplink transmission over the one or more additional uplink resources.

6. The method of claim 1, wherein the signal instructs the UE (120) to adjust the transmission parameter of the grant-based uplink transmission by instructing the UE (120) to shift the grant-based uplink transmission from the second uplink resource to a third uplink resource of the subframe.

7. The method of claim 1, wherein the signal instructs the UE (120) to adjust the transmission parameter of the grant-based uplink transmission by instructing the UE (120) to postpone the grant-based uplink transmission.

8. The method of any of claims 1 to 7, wherein detecting the grant-free uplink transmission comprises:
detecting the presence of the grant-free uplink transmission based on a pilot symbol carried by the grant-free uplink transmission, wherein the signal is transmitted prior to the base station attempting to decode at least some of the data carried by the grant-free uplink transmission.

9. The method of any of claims 1 to 8, wherein determining that the retransmission of the grant-free uplink transmission will occur over the second uplink resource in the subframe comprises:
detecting an identifier in a pilot symbol carried by the grant-free uplink transmission; and
determining that the retransmission of the grant-free uplink transmission will occur in the second uplink resource based on a semi-static resource configuration associated with the identifier.

10. An apparatus comprising:
a processor (1504); and
a non-transitory computer readable storage medium (1506) storing programming for execution by the processor, the programming including instructions to:
detect a grant-free uplink transmission over a first uplink resource of a subframe **characterized by** the programming further including instructions to
determine that a retransmission of the grant-free uplink transmission will occur over a second uplink resource in the subframe, the second uplink resource of the subframe having been previously scheduled to carry a grant-based uplink transmission from a user equipment, UE; and
transmit a signal over a downlink resource of the subframe, the signal instructing the UE to adjust a transmission parameter of the grant-based uplink transmission.

11. A method for mitigating interference in a subframe, the method comprising:
receiving (1010), by a first user equipment, UE, (120), a scheduling instruction from a base station (110), the scheduling instruction indicating that uplink resources are scheduled to carry a grant-based uplink transmission of the first UE (120) **characterized by**
monitoring (1020), by the first UE (120), one or more downlink resources outside a downlink control channel associated with the first UE (120) for an indication that a retransmission of a grant-free uplink transmission is to occur over a subset of the uplink resources scheduled to carry the grant-based uplink transmission of the first UE (120); and
puncturing (1030), by the first UE (120), a portion of the grant-based uplink transmission corresponding to the subset of uplink resources upon detecting the indication that the grant-free uplink transmission is to occur over the subset of uplink resources.

12. The method of claim 11, wherein the indication that the retransmission of the grant-free uplink transmission is to occur over the subset of uplink resources is detected in a downlink control channel associated with the second UE (120).

13. The method of any of claims 11 to 12, wherein the indication that the retransmission of the grant-free uplink transmission is to occur over the subset of uplink resources is detected in an acknowledgement or negative acknowledgment channel associated with the second UE (120).

## Patentansprüche

1. Verfahren zum Vermindern von Interferenz, wobei das Verfahren Folgendes umfasst:
Erfassen (410) einer gewährungsfreien Uplink-Übertragung über eine erste Uplink-Ressource durch eine Basisstation (110),
**gekennzeichnet durch**
Bestimmen (420) durch die Basisstation (110), dass eine erneute Übertragung der gewährungsfreien Uplink-Übertragung über eine zweite Uplink-Ressource erfolgen wird, wobei für die zweite Uplink-Ressource vorangehend geplant wurde, dass diese eine gewährungsbasierte Uplink-Übertragung von einem Benutzergerät, UE, (120) trägt; und
Übertragen (430) eines Signals über eine Downlink-Ressource durch die Basisstation (110), wobei das Signal das UE (120) anweist, einen Übertragungsparameter der gewährungsbasierten Uplink-Übertragung einzustellen.

2. Verfahren nach Anspruch 1, wobei die erste Uplink-Ressource und die zweite Uplink-Ressource jeweils ein oder mehrere orthogonale Frequenzmultiplexsymbole (OFDM-Symbole) beinhalten.

3. Verfahren nach einem der Ansprüche 1 bis 2, wobei das Signal durch Anweisen des UE (120), einen Übertragungsleistungspegel der gewährungsbasierten Uplink-Übertragung während der zweiten Uplink-Ressource zu verringern, das UE (120) anweist, den Übertragungsparameter der gewährungsbasierten Uplink-Übertragung einzustellen.

4. Verfahren nach einem der Ansprüche 1 bis 3, wobei das Signal durch Anweisen des UE (120), die gewährungsbasierte Uplink-Übertragung während der zweiten Uplink-Ressource stummzuschalten, das UE (120) anweist, den Übertragungsparameter der gewährungsbasierten Uplink-Übertragung einzustellen.

5. Verfahren nach einem der Ansprüche 1 bis 4, wobei für die gewährungsbasierte Uplink-Übertragung vorangehend geplant wurde, dass diese über einen Satz von Uplink-Ressourcen durchgeführt wird, der die zweite Uplink-Ressource und eine oder mehrere zusätzliche Uplink-Ressourcen beinhaltet, und
wobei das Signal das UE (120) ferner durch Folgendes anweist, den Übertragungsparameter der gewährungsbasierten Uplink-Übertragung einzustellen: Anweisen des UE (120), die gewährungsbasierte Uplink-Übertragung über die zweite Uplink-Ressource stummzuschalten und einen Pegel des Modulation and Coding Scheme, MCS, anzupassen, das verwendet wird, um Abschnitte der gewährungsbasierten Uplink-Übertragung über die eine zusätzliche Uplink-Ressource oder mehreren zusätzlichen Uplink-Ressourcen zu übertragen.

6. Verfahren nach Anspruch 1, wobei das Signal durch Anweisen des UE (120), die gewährungsbasierte Uplink-Übertragung von der zweiten Uplink-Ressource auf eine dritte Uplink-Ressource des Subframes umzuschalten, das UE (120) anweist, den Übertragungsparameter der gewährungsbasierten Uplink-Übertragung einzustellen.

7. Verfahren nach Anspruch 1, wobei das Signal durch Anweisen des UE (120), die gewährungsbasierte Uplink-Übertragung zu verschieben, das UE (120) anweist, den Übertragungsparameter der gewährungsbasierten Uplink-Übertragung einzustellen.

8. Verfahren nach einem der Ansprüche 1 bis 7, wobei das Erfassen der gewährungsfreien Uplink-Übertragung Folgendes umfasst:
Erfassen der Anwesenheit der gewährungsfreien Uplink-Übertragung auf Grundlage eines Pilotsymbols, das durch die gewährungsfreie Uplink-Übertragung getragen wird, wobei das Signal übertragen wird, bevor die Basisstation versucht, zumindest einen Teil der Daten zu dekodieren, die durch die gewährungsfreie Uplink-Übertragung getragen werden.

9. Verfahren nach einem der Ansprüche 1 bis 8, wobei das Bestimmen, dass die erneute Übertragung der gewährungsfreien Uplink-Übertragung über die zweite Uplink-Ressource in dem Subframe erfolgen wird, Folgendes umfasst:
Erfassen einer Kennung in einem Pilotsymbol, die durch die gewährungsfreie Uplink-Übertragung getragen wird; und
Bestimmen, dass die erneute Übertragung der gewährungsfreien Uplink-Übertragung auf Grundlage einer semistatischen Ressourcenkonfiguration, die der Kennung zugeordnet ist, in der zweiten Uplink-Ressource erfolgen wird.

10. Einrichtung, umfassend:
einen Prozessor (1504); und
ein nicht flüchtiges computerlesbares Speichermedium (1506), auf dem eine Programmierung zur Ausführung durch den Prozessor gespeichert ist, wobei die Programmierung Anweisungen zu Folgendem beinhaltet:
Erfassen einer gewährungsfreien Uplink-Übertragung über eine erste Uplink-Ressource eines Subframes, **dadurch gekennzeichnet, dass** die Programmierung ferner Anweisungen zu Folgendem beinhaltet:
Bestimmen, dass eine erneute Übertragung der gewährungsfreien Uplink-Übertragung über eine zweite Uplink-Ressource in dem Subframe erfolgen wird, wobei für die zweite Uplink-Ressource des Subframes vorangehend geplant wurde, dass diese eine gewährungsbasierte Uplink-Übertragung von einem Benutzergerät, UE, trägt; und
Übertragen eines Signals über eine Downlink-Ressource des Subframes, wobei das Signal das UE anweist, einen Übertragungsparameter der gewährungsbasierten Uplink-Übertragung einzustellen.

11. Verfahren zum Vermindern von Interferenz in einem Subframe, wobei das Verfahren Folgendes umfasst:
Empfangen (1010) einer Planungsanweisung von einer Basisstation (110) durch ein erstes Benutzergerät, UE, (120), wobei die Planungsanweisung angibt, dass für Uplink-Ressourcen geplant ist, dass diese eine gewährungsbasierte Uplink-Übertragung des ersten UE (120) tragen, **gekennzeichnet durch**:
Überwachen (1020) von einer oder mehreren Downlink-Ressourcen außerhalb eines Downlink-Steuerkanals, der dem ersten UE (120) zugeordnet ist, bezüglich einer Angabe, dass eine erneute Übertragung der gewährungsfreien Uplink-Übertragung über einen Teilsatz der Uplink-Ressourcen erfolgen soll, für den geplant ist, dass dieser die gewährungsbasierte Uplink-Übertragung des ersten UE (120) trägt, durch das erste UE (120); und
Punktieren (1030) eines Abschnitts der gewährungsbasierten Uplink-Übertragung, der dem Teilsatz von Uplink-Ressourcen entspricht, durch das erste UE (120) bei Erfassen der Angabe, dass die gewährungsfreie Uplink-Übertragung über den Teilsatz von Uplink-Ressourcen erfolgen soll.

12. Verfahren nach Anspruch 11, wobei die Angabe, dass die erneute Übertragung der gewährungsfreien Uplink-Übertragung über den Teilsatz von Uplink-Ressourcen erfolgen soll, in einem Downlink-Steuerkanal erfasst wird, der dem zweiten UE (120) zugeordnet ist.

13. Verfahren nach einem der Ansprüche 11 bis 12, wobei die Angabe, dass die erneute Übertragung der gewährungsfreien Uplink-Übertragung über den Teilsatz von Uplink-Ressourcen erfolgen soll, in einem Bestätigungskanal oder Kanal einer negativen Bestätigung erfasst wird, der dem zweiten UE (120) zugeordnet ist.

## Revendications

1. Procédé permettant d'atténuer des interférences, le procédé comprenant :
la détection (410), par une station de base (110), d'une transmission de liaison montante sans octroi sur une première ressource de liaison montante, **caractérisé par**
le fait de déterminer (420), par la station de base (110), qu'une retransmission de la transmission de liaison montante sans octroi se produira sur une deuxième ressource de liaison montante, la deuxième ressource de liaison montante ayant été précédemment planifiée pour transporter une transmission de liaison montante avec octroi à partir d'un équipement utilisateur, UE (120) ; et
la transmission (430), par la station de base (110), d'un signal sur une ressource de liaison descendante, le signal donnant l'instruction à l'UE (120) de régler un paramètre de transmission de la transmission de liaison montante avec octroi.

2. Procédé selon la revendication 1, dans lequel la première ressource de liaison montante et la deuxième ressource de liaison montante incluent chacune un ou plusieurs symboles à multiplexage par répartition orthogonale de la fréquence (OFDM).

3. Procédé selon l'une quelconque des revendications 1 à 2, dans lequel le signal donne l'instruction à l'UE (120) de régler le paramètre de transmission de la transmission de liaison montante avec octroi en donnant l'instruction à l'UE (120) de réduire un niveau de puissance de transmission de la transmission de liaison montante avec octroi durant la deuxième ressource de liaison montante.

4. Procédé selon l'une quelconque des revendications 1 à 3, dans lequel le signal donne l'instruction à l'UE (120) de régler le paramètre de transmission de la transmission de liaison montante avec octroi en donnant l'instruction à l'UE (120) de mettre en sourdine la transmission de liaison montante avec octroi durant la deuxième ressource de liaison montante.

5. Procédé selon l'une quelconque des revendications 1 à 4, dans lequel la transmission de liaison montante avec octroi a été planifiée précédemment pour être mise en œuvre sur un ensemble de ressources de liaison montante qui inclut la deuxième ressource de liaison montante et une ou plusieurs ressources de liaison montante supplémentaires, et
dans lequel le signal donne en outre l'instruction à l'UE (120) de régler le paramètre de transmission de la transmission de liaison montante avec octroi en donnant l'instruction à l'UE (120) de mettre en sourdine la transmission de liaison montante avec octroi sur la deuxième ressource de liaison montante et d'adapter un niveau de schéma de modulation et de codage, MCS, utilisé pour transmettre des parties de la transmission de liaison montante avec octroi sur l'une ou les plusieurs ressources de liaison montante supplémentaires.

6. Procédé selon la revendication 1, dans lequel le signal donne l'instruction à l'UE (120) de régler le paramètre de transmission de la transmission de liaison montante avec octroi en donnant l'instruction à l'UE (120) de décaler la transmission de liaison montante avec octroi de la deuxième ressource de liaison montante à une troisième ressource de liaison montante de la sous-trame.

7. Procédé selon la revendication 1, dans lequel le signal donne l'instruction à l'UE (120) de régler le paramètre de transmission de la transmission de liaison montante avec octroi en donnant l'instruction à l'UE (120) de reporter la transmission de liaison montante avec octroi.

8. Procédé selon l'une quelconque des revendications 1 à 7, dans lequel la détection de la transmission de liaison montante sans octroi comprend :
la détection de la présence de la transmission de liaison montante sans octroi sur la base d'un symbole pilote transporté par la transmission de liaison montante sans octroi, dans lequel le signal est transmis avant que la station de base ne tente de décoder au moins certaines des données transportées par la transmission de liaison montante sans octroi.

9. Procédé selon l'une quelconque des revendications 1 à 8, dans lequel le fait de déterminer que la retransmission de la transmission de liaison montante sans octroi se produira sur la deuxième ressource de liaison montante dans la sous-trame comprend :
la détection d'un identificateur dans un symbole pilote transporté par la transmission de liaison montante sans octroi ; et
le fait de déterminer que la retransmission de la transmission de liaison montante sans octroi se produira dans la deuxième ressource de liaison montante sur la base d'une configuration de ressource semi-statique associée à l'identificateur.

10. Appareil comprenant :
un processeur (1504) ; et
un support de stockage non transitoire lisible par ordinateur (1506) stockant une programmation pour une exécution par le processeur, la programmation incluant des instructions pour :
détecter une transmission de liaison montante sans octroi sur une première ressource de liaison montante d'une sous-trame, **caractérisé par** la programmation incluant en outre des instructions pour
déterminer qu'une retransmission de la transmission de liaison montante sans octroi se produira sur une deuxième ressource de liaison montante dans la sous-trame, la deuxième ressource de liaison montante de la sous-trame ayant été planifiée précédemment pour transporter une transmission de liaison montante avec octroi à partir d'un équipement utilisateur, UE ; et
transmettre un signal sur une ressource de liaison descendante de la sous-trame, le signal donnant l'instruction à l'UE de régler un paramètre de transmission de la transmission de liaison montante avec octroi.

11. Procédé permettant d'atténuer des interférences dans une sous-trame, le procédé comprenant :
la réception (1010), par un premier équipement utilisateur, UE, (120), d'une instruction de planification à partir d'une station de base (110), l'instruction de planification indiquant que des ressources de liaison montante sont planifiées pour transporter une transmission de liaison montante avec octroi du premier UE (120), **caractérisé par**
la surveillance (1020), par le premier UE (120), d'une ou de plusieurs ressources de liaison descendante hors d'un canal de commande de liaison descendante associé au premier UE (120) pour une indication qu'une retransmission d'une transmission de liaison montante sans octroi doit se produire sur un sous-ensemble des ressources de liaison montante planifiées pour transporter la transmission de liaison montante avec octroi du premier UE (120) ; et
la perforation (1030), par le premier UE (120), d'une partie de la transmission de liaison montante avec octroi correspondant au sous-ensemble de ressources de liaison montante lors d'une détection de l'indication que la transmission de liaison montante sans octroi doit se produire sur le sous-ensemble de ressources de liaison montante.

12. Procédé selon la revendication 11, dans lequel l'indication que la retransmission de la transmission de liaison montante sans octroi doit se produire sur le sous-ensemble de ressources de liaison montante est détectée dans un canal de commande de liaison descendante associé au second UE (120).

13. Procédé selon l'une quelconque des revendications 11 à 12, dans lequel l'indication que la retransmission de la transmission de liaison montante sans octroi doit se produire sur le sous-ensemble de ressources de liaison montante est détectée dans un canal d'accusé de réception ou d'accusé de réception négatif associé au second UE (120).
